# EUROPÄISCHE PATENTSCHRIFT

(11) **EP 3 151 993 B1**
(45) Veröffentlichungstag und Bekanntmachung des Hinweises auf die Patenterteilung: **28.09.2022**
(21) Anmeldenummer: 15727552.0
(22) Anmeldetag: 21.05.2015
(51) Int. Cl.: B23F 21/00, B23F 5/16, B23F 19/10

(54) **VERFAHREN ZUM BEARBEITEN EINES WERKSTÜCKS, WERKZEUGANORDNUNG UND VERZAHNUNGSMASCHINE**
METHOD FOR MACHINING A WORKPIECE, TOOL ARRANGEMENT AND TOOTH CUTTING MACHINE
PROCÉDÉ D'USINAGE D'UNE PIÈCE, AGENCEMENT D'OUTIL ET MACHINE À TAILLER LES ENGRENAGES

(30) Priorität: 05.06.2014 DE 102014008475
(43) Veröffentlichungstag der Anmeldung: 12.04.2017
(73) Patentinhaber: Gleason-Pfauter Maschinenfabrik GmbH, 71636 Ludwigsburg (DE)
(72) Erfinder: WEPPELMANN, Edgar, 71679 Asperg (DE); KRESCHEL, Jürgen, 71679 Asperg (DE); FISCHER, Steffen, 71686 Ramseck am Neckar (DE)
(74) Vertreter: Leinweber & Zimmermann
(86) Internationale Anmeldenummer: PCT/EP2015/001041
(87) Internationale Veröffentlichungsnummer: WO 2015/185186

(56) Entgegenhaltungen:
- DE-A1- 2 654 177
- DE-U1- 20 320 294
- US-A1- 2002 197 121
- "Abdachen und Verzahnen in einer Aufspannung Herstellung von Zahnrädern und verzahnten Bauteilen", WERKSTATT UND BETRIEB, CARL HANSER VERLAG GMBH & CO. KG, DE, Bd. 146, Nr. 11, 1. November 2013 (2013-11-01), Seiten 56-57, XP001587012, ISSN: 0043-2792
- Hermann Stadtfeld: "Power Skiving of cylindrical gears on different machine platforms", Gear Technology, 28. Februar 2014 (2014-02-28), Seiten 52-62, XP055157654, Gefunden im Internet: URL:http://www.geartechnology.com/issues/0 114x/power-skiving.pdf [gefunden am 2014-12-09]

## Beschreibung

Die Erfindung betrifft ein Verfahren zum Bearbeiten eines Werkstücks gemäß dem Oberbegriff des Anspruchs 1, das aus dem Dokument DE 10 2007 015 357 A1 bekannt ist, sowie eine Werkzeuganordnung und eine Werkzeugmaschine zur Ausführung des Verfahrens.

Derartige Verfahren sind bekannt, beispielsweise durch das Wälzschälverfahren, mit dem im ersten Bearbeitungseingriff eine Verzahnung erzeugt wird, und das Entgraten, bei dem im zweiten an der Stirnseite vorgenommenen Bearbeitungseingriff die an der Stirnseite der Werkstückverzahnung erzeugten Grate beseitigt werden. Das Wälzschälverfahren selbst ist dem Fachmann hinsichtlich der Ausgestaltung der Schälräder mit der an einer Seite gebildeten Schneidkanten und der dazugehörigen Kinematik mit dem Achskreuzwinkel zwischen Werkzeugdrehachse und Werkstückdrehachse bekannt, im Übrigen sei für weitere Einzelheiten des Wälzschälverfahrens auf die EP 2 537 615 A1 verwiesen, auf die bezüglich der Gestaltung der Schälräder sowie der Maschinenachskinematik des Verfahrens Bezug genommen wird.

Ein Verfahren der eingangs genannten Art wird in der DE 10 2007 015 357 A1 offenbart, die das Wälzschälen zur Erzeugung einer Verzahnung beschreibt (erster Bearbeitungseingriff), und gemäß der ein Entgraten der erzeugten Verzahnung mit einem an der die Grate aufweisende Rückseite der erzeugten Verzahnung angreifenden Entgratstahl erfolgt, der in den ersten beiden Figuren der DE 10 2007 015 357 A1 dargestellt ist und dort das Bezugszeichen 23 trägt.

DE 2 654 177 A1 offenbart ein Schälverfahren, bei dem dem verzahnungserzeugenden Schälrad ein Vorschneider vorgeschaltet ist.

US 2002/0197121 A1 offenbart eine Hintereinanderausführung von Entgraten und Verzahnungsfeinbearbeitung in der gleichen Werkstückaufspannung.

DE 20 320 204 U1 offenbart ein auf der gleichen Achse wie ein schneckenförmiger Wälzfräser angeordnetes Anfaswerkzeug.

Der Erfindung liegt die Aufgabe zugrunde, ein Verfahren der eingangs genannten Art insbesondere mit Hinblick auf eine höhere, im zweiten Bearbeitungseingriff erzielbare Bearbeitungsqualität zu verbessern.

Diese Aufgabe wird gelöst durch eine Weiterbildung des Verfahrens mit den Merkmalen von Anspruch 1. Es ist vorgesehen, der zweite Eingriffsbereich mittels gleicher Bewegungsachsen gegenüber dem Werkstück positionierbar ist wie der erste Eingriffsbereich und mit dem ersten Eingriffsbereich bewegungsgekoppelt ist.

Über die Verfügbarkeit gleicher Bewegungsachsen für die Positionierung gegenüber dem Werkstück gelingt somit eine ähnliche Relativpositionierung der Lagebeziehung des zweiten Eingriffsbereichs wie die des ersten Eingriffsbereichs unter Verwendung der gleichen Bewegungsachsen, durch welche eine Grundlage insbesondere auch für eine größere Variabilität der gegenseitigen Relativpositionierung im zweiten Bearbeitungseingriff geschaffen wird, und es können vernünftige Bearbeitungsergebnisse im zweiten Bearbeitungseingriff erreicht werden.

Da der zweite Eingriffsbereich mit dem ersten Eingriffsbereich dazu bewegungsgekoppelt ist, gelingt zudem eine Durchführung des zweiten Bearbeitungseingriffs ohne Positions- und/oder Aufspannungsänderungen des bearbeiteten Werkstücks, und auch ohne das Erfordernis eines Werkzeugwechsels. Es ergibt sich ein vorteilhaftes Zusammenspiel der beiden Bearbeitungseingriffe. Hier muß die Bearbeitung des ersten Bearbeitungseingriffs nicht zwingend vor dem des zweiten abgeschlossen sein, ein "Zwischenentgraten" nach einer Anzahl Wälzschälhübe ist z.B. ebenfalls denkbar. Grundsätzlich wäre es jedoch auch denkbar, dem zweiten Eingriffsbereich gleiche Bewegungsachsen dadurch zur Verfügung zu stellen, daß ein den zweiten Eingriffsbereich aufweisendes Werkzeug anstelle des Schneidrads auf eine Werkzeugspindel aufgespannt wird. Ein Orts- und/oder Aufspannungswechsel ist in einer bevorzugten Verfahrensvariante nicht vorgesehen, könnte aber unter anderen Gesichtspunkten vorgenommen werden, die weiter unten erläutert werden.

Der zweite Eingriffsbereich fällt nicht mit dem ersten Eingriffsbereich zusammen, könnte jedoch durchaus ein anderer Bereich als der erste Eingriffsbereich einer den ersten Eingriffsbereich tragenden Struktur sein, wie ebenfalls anhand der nachfolgend beschriebenen bevorzugten Ausgestaltungen erläutert wird. Bei dem Bearbeitungseingriff an der bewegungsauslaufenden Seite erfolgt ein Beseitigen der an dieser Axialseite durch die Verzahnungserzeugung entstandenen Materialüberstände, d.h. (Primär)Grate, durch ein Abschneiden (Abscheren). Besonders bevorzugt findet weder vor noch während des zweiten Bearbeitungseingriffs ein plastisches Verformen der Zahnkanten der Werkstückverzahnung in eine Fase statt, insbesondere keine Einwirkung auf die Zahnkanten der erzeugten Verzahnung, durch die Material von der Kante selbst abgenommen wird.

Zudem ist der Begriff "Werkstückverzahnung" mit ihrer bewegungsauslaufenden Seite so auszulegen, daß letztere nicht zwingend die axiale Endseite einer "Gesamtverzahnung" sein muß. Vielmehr könnte eine solche "Gesamtverzahnung", beispielsweise eine Innenverzahnung, einen Übergang von einer höheren zu einer tieferen Verzahnung aufweisen, und an dem Übergang ebenfalls eine Axialseite bestehen, in die die Bewegung teilweise ausläuft. Gleiches gilt bei einer die Verzahnung unterbrechenden Nut. Auch hier gibt es eine Verzahnung (Verzahnungsbereich) mit bewegungsauslaufender Seite, an der Grate bei der Verzahnungserzeugung entstehen.

Während das Verfahren bevorzugt für innenverzahnte Werkstücke zum Einsatz kommt, lassen sich damit ebenso außenverzahnte Werkstücke bearbeiten. Zudem läßt sich der erste Bearbeitungseingriff auch im Wälzstoßverfahren durchführen.

In einer besonders bevorzugten Ausgestaltung ist der zweite Eingriffsbereich um eine Drehachse drehbar, die im zweiten Bearbeitungseingriff koaxial zu einer im ersten Bearbeitungseingriff koaxial zur Drehachse des Schneidrads verlaufenden Werkzeugspindelachse verläuft. Insbesondere können der erste und der zweite Eingriffsbereich rotatorisch über dieselbe Drehachse gekoppelt sein. Auf diese Weise kann der zweite Eingriffsbereich auch eine rotatorische Bewegung ausführen, wodurch ein besseres Bearbeitungsergebnis des zweiten Bearbeitungseingriffs erreichbar ist. So können Grate zuverlässig beseitigt werden. Zudem ist eine kompakte Maschinengestaltung möglich, mit Ausgabe bereits entgrateter Werkstücke.

In einer weiteren besonders bevorzugten Ausgestaltung ist der zweite Eingriffsbereich durch eine Verzahnung gebildet, insbesondere durch eine Stirnseite einer Verzahnung. Dies erlaubt es, im zweiten Bearbeitungseingriff gezielt einzelne Bereiche an der zu bearbeitenden Stirnseite der Werkstückverzahnung zu bearbeiten. Zudem sind geringere Kollisionsprobleme mit einer Aufspannvorrichtung der zu bearbeitenden Verzahnung zu berücksichtigen. Bevorzugt im bewegungsgekoppelten Fall kann der zweite Eingriffsbereich an einem Entgratwerkzeug in Form einer Scheibe, aber auch eines Entgratstahls, einer Entgratnadel oder einer solche Elemente aufweisenden Entgratanordnung sein. Insbesondere bei vergleichsweise schwach haftenden Graten ist es dann auch möglich, bei nicht rotierendem Entgratwerkzeug zu entgraten, unter Nutzung von für den ersten Eingriffsbereich vorhandenen Positionierachsen.

Dabei kann vorgesehen sein, daß der zweite Eingriffsbereich bezüglich der werkstückachsparallelen Schneidbewegungsrichtungskomponente des ersten Bearbeitungseingriffs hinter dem ersten Eingriffsbereich liegt. Der erste Eingriffsbereich würde sich entsprechend im Falle bewegungsgekoppelter Eingriffsbereiche und, soweit die bewegungsauslaufende Seite der Werkstückverzahnung die der Werkstückverzahnungsaufspannung zugewandte Seite ist, näher an der Werkstückaufspannung zu liegen kommen, und ein entsprechender Raumbereich wäre freizuhalten.

In einer möglichen Ausgestaltung ist der zweite Eingriffsbereich nahe der zweiten Stirnseite des Schneidrads gebildet, insbesondere durch die Schneidradverzahnung an dieser zweiten Stirnseite gebildet. Bei diesem Fall gelingt eine besonders einfache Realisierung einer für das Verfahren geeigneten Werkzeuganordnung in Form eines Schneidrads, deren Vorderseite mit den dort vorgesehenen Schneidkanten zur Verzahnungserzeugung herangezogen wird (erster Eingriffsbereich und erster Bearbeitungseingriff) und dessen Rückseite (zweiter Eingriffsbereich) die bewegungsauslaufende Seite der Werkstückverzahnung im zweiten Bearbeitungseingriff bearbeitet.

Ebenfalls ist denkbar, daß der zweite Eingriffsbereich an einem zweiten Schneidrad gebildet ist, das insbesondere starr mit dem Schneidrad des ersten Bearbeitungseingriffs verbunden ist und dessen Abmessung in Schneidachsrichtung insbesondere geringer ist als die des ersten Schneidrads, bevorzugt um wenigstens 20%, insbesondere um wenigstens 40%. Ein dazu geeignetes Werkzeug könnte etwa als Tandemwerkzeug gestaltet sein, also eine die beiden Werkzeuge tragenden, auf eine Werkzeugspindel aufspannbaren Werkzeuganordnung. Diese Variante bietet den Vorteil, nicht an die Verzahnungsgeometrie des (ersten) Schneidrads für die Verzahnungserzeugung gebunden zu sein. Es wird jedoch bevorzugt, daß das zweite Schneidrad ebenfalls verzahnt ist, bevorzugt mit ähnlichem Modul, insbesondere gleichem Modul wie das erste Schneidrad. Der Ausdruck "zweites Schneidrad" ist hierbei so zu verstehen, daß eine radartige Form vorliegt und eine Eignung zum Gratabscheren vorhanden ist, während das zweite Schneidrad Schneidkanten zur Erzeugung einer Verzahnung nicht benötigt.

Eine geringere axiale Abmessung des zweiten Rads kann insbesondere dann bestehen, wenn eine Bearbeitung an einer durch eine Nut oder einen Übergang zwischen einer höheren und tieferen Verzahnung geschaffener bewegungsauslaufenden Seite vorzunehmen ist. Insbesondere kann vorgesehen sein, daß die axiale Abmessung des zweiten Rads passend gering zum Eindringen in eine Nut ausgelegt ist.

Es ist durchaus auch vorgesehen, die beiden oben genannten Vorteile miteinander zu verbinden. So könnte das erste Schneidrad an der Rückseite mit dem zweiten Eingriffsbereich ausgestattet sein, und ein weiteres radförmiges, insbesondere bewegungsgekoppeltes Werkzeug vorgesehen sein, dessen axiale Abmessung wenigstens 20 %, insbesondere wenigstens 40%, durchaus auch 50 % oder mehr geringer ausfällt als die des ersten Schneidrads, und das an einer Stirnseite einen (weiteren zweiten oder) dritten Eingriffsbereich bildet, mit dem speziell an Nuten oder Übergängen in der Verzahnungshöhe am Werkstück entstehende Grate beseitigt werden können.

In einer zweckmäßigen Ausgestaltung des Verfahrens wird vorgesehen, daß ein Außendurchmesser des zweiten Eingriffsbereichs, insbesondere der Kopfkreis einer Verzahnung des zweiten Eingriffsbereichs bei dem zweiten Bearbeitungseingriff mit dem Fußkreis der Werkstückverzahnung zur Überlappung gebracht wird. Auf diese Weise kann eine zuverlässige Gratbeseitigung auch im Fußbereich der Werkstückverzahnung erfolgen.

Des Weiteren ist in einer besonders bevorzugten Ausgestaltung vorgesehen, daß bei dem zweiten Bearbeitungseingriff, in Projektion auf eine Ebene orthogonal zur Werkstückachse gesehen, ein Flankenbereich der Werkstückverzahnung mit einem Verzahnungsflankenbereich des zweiten Eingriffsbereichs zur Überlappung gebracht wird. Insbesondere ist diesbezüglich vorgesehen, daß die Verzahnung des zweiten Eingriffsbereichs wälzgekoppelt zur Rotation der Werkstückachse rotiert und der Flankenbereich der Werkstückverzahnung mit einer Einhüllenden von Wälzstellungen eines Zahns des zweiten Eingriffsbereichs zur Überlappung gebracht wird.

Wie oben bereits erläutert, sollen bei dem zweiten Bearbeitungseingriff infolge der Erzeugung der Werkstückverzahnung an deren bewegungsauslaufender Seite entstandene Grate durch ein Abscheren beseitigt werden. In diesem Zusammenhang ist in einer besonders bevorzugten Ausgestaltung vorgesehen, daß das Abscheren der Grate durch eine Scherbewegung erfolgt. Die Scherbewegung ist die gratentfernende Relativbewegung zwischen Werkzeug und Werkstück. Bevorzugt ist für wenigstens 50 %, bevorzugt wenigstens 70 %, insbesondere wenigstens 90 % der Abscherpunkte des im Bearbeitungseingriff bearbeiteten Werkstückbereiches jeder Werkstückflankenseite das Skalarprodukt aus dem in die Ebene senkrecht zur Werkstückachse projizierten und darin auf Länge Eins normierten Richtungsvektor der Scherbewegung im Abscherpunkt und dem in die Ebene senkrecht zur Werkstückachse projizierten und darin auf Länge Eins normierten, im Abscherpunkt auf der Werkstückflanke stehenden und zur Lücke zeigenden Normalenvektor nicht größer als 0,5, bevorzugt nicht größer als 0,3, weiter bevorzugt nicht größer als 0,1, insbesondere nicht größer als 0, die Scherbewegung also bevorzugt von einer Lücke der Werkstückverzahnung weg gerichtet, an der einen wie insbesondere auch der anderen der die Lücke begrenzenden Zahnflanken und einschließlich deren Zahnfußbereiche. Anderenfalls würde eine Gefahr bestehen, daß ein Grat nicht zuverlässig abgeschert wird, sondern in die Lücke der Verzahnung umklappt und dort verbleiben kann, was in der weitergehenden Verwendung der Verzahnung Probleme aufwerfen kann. Eine solche Gefahr besteht beispielsweise bei gegenüber einem raumfesten Entgratwerkzeug vorbeigeführten Werkstück an wenigstens einer Flankenseite. Mit dieser bevorzugten erfinderischen Ausgestaltung können somit aufwendige nachgeschaltete Kompensationsmaßnahmen vermieden werden.

In einer weiteren Ausgestaltung ist vorgesehen, daß im zweiten Bearbeitungseingriff eine Bearbeitung an der Seite der linken und rechten Verzahnungsflanke nacheinander erfolgt, wobei es auf die Reihenfolge nicht ankommt. Dies ermöglicht eine gezieltere Bearbeitung der Unterseite der Werkstückverzahnung an der jeweiligen Flankenseite und entsprechend eine abgestimmte Einstellung der Richtungskomponenten einer Abscherbewegung.

Des Weiteren wird in einer Ausgestaltung des Verfahrens bei dem zweiten Bearbeitungseingriff zwischen der Bearbeitung an der linken und an der rechten Flanke die Drehrichtung der Werkstückdrehung umgekehrt, insbesondere auch eine Drehrichtung der Drehung des zweiten Eingriffsbereichs. Auch dies erlaubt eine flankenindividualisierte Abstimmung einer Scherrichtung der beim Entgraten vorgenommenen Abscherbewegung.

In einer als vorteilhaft angesehenen Verfahrensvariante wird der zweite Eingriffsbereich zunächst bezüglich der werkstückachsparallelen Schneidbewegungskomponente hinter der bewegungsauslaufenden Seite der Werkstückverzahnung positioniert, dann sein Abstand zur Werkstückachse geändert und der zweite Eingriffsbereich für den zweiten Bearbeitungseingriff entgegen der werkstückachsparallelen Schneidbewegungskomponente bewegt. Die Achsabstandsänderung zur Werkstückachse ist eine Vergrößerung, wenn die erzeugte Verzahnung eine Innenverzahnung ist, und eine Verringerung, wenn sie eine Außenverzahnung ist. Nimmt man zu Anschauungszwecken eine vertikale Werkstückachse an und eine nach unten gerichtete Werkzeugbewegung bei der Erzeugung der Verzahnung, so taucht man bei dieser Verfahrensvariante zunächst mit dem zweiten Eingriffsbereich unterhalb der zu bearbeitenden Verzahnungsunterseite, bevorzugt bis ein Kopfkreis des zweiten Bearbeitungsbereichs wenigstens den Fußkreis der erzeugten Verzahnung erreicht und bevorzugt überschreitet, was einer Zustellung mit Radialkomponente entspricht, und bewegt den zweiten Eingriffsbereich in einem axialen Vorschub nach oben, bis Kontakt mit den Graten hergestellt und die Grate an der Verzahnungsunterseite abgeschert werden. Eine Annäherung bis auf genau das Niveau der Verzahnungsunterseite (auf Flächenkontakt) ist dabei nicht erforderlich, es kann ein minimaler, zum Abscheren der Grate ausreichender Abstand der im zweiten Bearbeitungseingriff einander zugewandten Flächen verbleiben.

In einer besonders bevorzugten Verfahrensgestaltung wird die Werkstückdrehachse und eine Drehachse des zweiten Eingriffsbereichs für den zweiten Bearbeitungseingriff in einem vorbestimmten Drehzahlverhältnis angetrieben, insbesondere im umgekehrten Verhältnis der zugehörigen Zähnezahl (| n₂ / n₀ | = | z_{0/}z₂ |), also unter Wälzkopplungsbedingungen. Auf diese Weise gelingt es, daß in einer Projektion orthogonal zur Werkstückachse gesehen, aus der Sicht einer bewegten Lücke der erzeugten Verzahnung, ein Bereich des Verzahnungsprofils mit einer Einhüllenden von Wälzstellungen eines Zahns des zweiten Eingriffsbereichs zur Überlappung bringbar ist. In einem Werkstückumlauf kann dann in diesem Überlappungsbereich entgratet werden; mehrere Umläufe sind denkbar für ein verbessertes Entgratergebnis in diesem Bereich.

Eine derartige Bearbeitung wird von der Erfindung auch als eigenständig, also unabhängig von der Art der Erzeugung der Verzahnung und der Verfügbarkeit gleicher Achsen beim Entgraten und/oder der Kopplung an das verzahnungserzeugende Werkzeug als eigenständig schützenswertes Verfahren offenbart.

Die Erfindung betrifft somit ebenfalls ein Verfahren zur Bearbeitung einer Stirnseite einer Werkstückverzahnung, bei dem die Werkstückverzahnung um ihre Werkstückachse rotiert und eine werkzeugseitige Verzahnung wälzgekoppelt zur Rotation der Werkstückachse um ihre Werkzeugachse rotierend mit einer der zu bearbeitenden Stirnseite zugewandten Stirnseite in Bearbeitungseingriff gebracht wird, so daß Materialüberstände an der zu bearbeitenden Stirnseite abgeschert werden.

Der Bearbeitungseingriff dieser eigenständigen Verfahrensgestaltung entspricht hinsichtlich der bisherigen Beschreibung dem zweiten Bearbeitungseingriff, der der Beseitigung von Graten bevorzugt ohne Einwirkung auf die Zahnkantenform dient. Insoweit gelten auch die vorstehend und nachstehend hinsichtlich des zweiten Bearbeitungseingriffes dargestellten Merkmale, Einstellungen und Verfahrensgestaltungen für diese eigenständig offenbarte Verfahrensgestaltung und lassen sich mit dieser kombinieren bzw. auf diese übertragen.

In diesem Zusammenhang kann etwa vorgesehen werden, daß für den zweiten Bearbeitungseingriff zur Überlappung und/oder zur Änderung des Überlappungsbereiches eine werkstück- und/oder werkzeugseitige Zusatzdrehung ausgeführt wird. Eine solche Zusatzdrehung hat letztlich die Wirkung wie eine gegenseitige Verschiebung von Werkstück und Werkzeug in Tangentialrichtung. Des Weiteren ist in einer besonders bevorzugten Verfahrensgestaltung vorgesehen, daß im zweiten Bearbeitungseingriff eine Relativbewegung mit radial zur Werkstückachse verlaufender Richtungskomponente ausgeführt wird. Es wird somit eine Vorschubbewegung mit radialer Komponente ausgeführt, bevorzugt in Richtung auf den Zahnfuß der bearbeiteten Verzahnung hin.

In einer weiter bevorzugten Verfahrensgestaltung ist vorgesehen, daß im zweiten. Bearbeitungseingriff eine gegenseitige Lageänderung zwischen Werkstück und einer/der Einhüllenden von Wälzstellungen eines Zahns des zweiten Eingriffsbereichs vorgenommen wird, insbesondere die Einhüllende entlang einer Tangential- und Radialkomponenten aufweisenden Bahn bewegt wird. Anders ausgedrückt läßt sich, in Projektion auf eine Normalenebene zur Werkstückachse gesehen, die aus Sicht einer Lücke der an seiner bewegungsauslaufenden Seite zu bearbeitenden Verzahnung betrachtete Einhüllende der Wälzstellungen eines Zahns des zweiten Eingriffsbereichs derart verschieben, daß sie beispielsweise das Profil der Zahnlücke abfährt, also die Zahnflanken und den Fußbereich der Lücke sukzessive überlappt. Wie weiter unten anhand der Figurenbeschreibung erläutert wird, gibt es auch hierzu diverse Varianten hinsichtlich der Art einer einstellbaren Bewegungsbahn, deren abschnittsweisen Durchlaufens mit oder ohne Richtungsumkehr der zugrundeliegenden Bewegungen.

Insbesondere im Zusammenhang mit der angestrebten Abscherbewegung beim Entgraten von der Lücke weg wird es bevorzugt, daß die Umfangsgeschwindigkeit des Werkstücks in dem Bereich, in dem momentan entgratet wird und der sich bei radialer Zustellung ändern kann, annähernd gleich der Umfangsgeschwindigkeit der werkzeugseitigen Entgratkante ist. In diesem Zusammenhang kann mit dieser Zielsetzung eine Anpassung der Drehzahlen n₂ und n₀ während der insbesondere radialen Vorschubbewegung erfolgen. Im Falle symmetrischer Lückengeometrien der erzeugten Verzahnungen gelingen dadurch annähernd radiale Relativbewegungskomponenten der momentan wirkenden Entgratkanten des Werkzeugs. Bei asymmetrischen Lückengeometrien könnte zum Erreichen derselben Zielsetzung eine entsprechende Anpassung der Drehzahlen vorgenommen werden.

Die oben erläuterte Vermeidung des Umklappens der Grate in die Verzahnung wird durch weitere Aspekte der erfindungsgemäßen Lehre auch eigenständig erreichbar offenbart, also unabhängig von der Art der Erzeugung der Verzahnung und der Verfügbarkeit gleicher Achsen beim Entgraten und/oder bei der Kopplung an das verzahnungserzeugende Werkzeug, und insbesondere auch unabhängig von der Werkzeugform für den zweiten Bearbeitungseingriff.

Die Erfindung betrifft somit als eigenständig schützenswertes Verfahren ebenfalls ein Verfahren zur Bearbeitung einer Stirnseite einer Werkstückverzahnung, bei dem die Werkstückverzahnung um ihre Werkstückachse rotiert und ein Entgratwerkzeug um seine Werkzeugachse rotierend mit einem der zu bearbeitenden Stirnseite zugewandten Eingriffsbereich in Bearbeitungseingriff gebracht wird, so daß Materialüberstände an der zu bearbeitenden Stirnseite in einer Scherbewegung abgeschert werden, wobei für wenigstens 50 %, bevorzugt wenigstens 70 %, insbesondere wenigstens 90 % der Abscherpunkte des im Bearbeitungseingriff bearbeiteten Werkstückbereiches jeder Werkstückflankenseite das Skalarprodukt aus dem in die Ebene senkrecht zur Werkstückachse projizierten und darin auf Länge Eins normierten Richtungsvektor der Scherbewegung im Abscherpunkt und dem in die Ebene senkrecht zur Werkstückachse projizierten und darin auf Länge Eins normierten, im Abscherpunkt auf der Werkstückflanke stehenden und zur Lücke zeigenden Normalenvektor nicht größer als 0,5, bevorzugt nicht größer als 0,3, weiter bevorzugt nicht größer als 0,1, insbesondere nicht größer als 0 ist. Der Bearbeitungseingriff dieser eigenständigen Verfahrensgestaltung entspricht hinsichtlich der bisherigen Beschreibung dem zweiten Bearbeitungseingriff, der der Beseitigung von Graten bevorzugt ohne Einwirkung auf die Zahnkantenform dient. Insbesondere für diese Verfahrensgestaltung wird bevorzugt, daß dazu eine aufeinander abgestimmte Einstellung der jeweiligen werkstückseitigen und werkzeugseitigen Umfangsgeschwindigkeiten im gerade entgrateten Bereich erfolgt, insbesondere in Form im wesentlichen gleicher Umfangsgeschwindigkeiten. Das Entgratwerkzeug kann dazu ein verzahntes Werkzeug sein, aber auch z.B. eine Entgratscheibe sein oder einer oder mehrere rotierende Entgratstähle.

In einer besonders bevorzugen Verfahrensgestaltung weisen die Bewegungsachsen (zur Positionierung des ersten Eingriffsbereichs) eine erste Linearbewegungsachse mit Richtungskomponente parallel zur Werkstückachse und eine zweite Linearbewegungsachse mit Richtungskomponente orthogonal zur ersten Linearbewegungsachse auf, und insbesondere eine dritte Linearbewegungsachse mit einer Richtungskomponente orthogonal zu der von der ersten und zweiten Linearbewegungsachsen aufgespannten Ebene.

In einer besonders zweckmäßigen Ausgestaltung kann die erste Linearbewegungsachse parallel zur Werkstücksachse verlaufen und die zweite Linearbewegungsachse orthogonal dazu. Es wird bevorzugt, daß die erste und zweite Linearbewegungsachse zu den gleichen Bewegungsachsen gehören, mittels der der zweite Eingriffsbereich gegenüber dem Werkstück positionierbar ist.

In einer weiter bevorzugten Verfahrensgestaltung weisen die Bewegungsachsen (mit denen der erste Eingriffsbereich positionierbar ist) eine rotatorische Achse zur Einstellung eines Achskreuzwinkels zwischen Werkstückachse und Schneidradachse auf. Insbesondere kann dabei der Achskreuzwinkel für die erste und zweite Bearbeitung gleichbelasen werden, wodurch die rotatorische Maschinenachse entlastet wird. Diese rotatorische Achse ist erforderlich, wenn die Erzeugung der Verzahnung am Werkstück durch das Wälzschälverfahren erfolgt. Die Erzeugung der Verzahnung an dem Werkstück könnte aber auch beispielsweise durch Wälzstoßen erzeugt werden; in diesem Fall wäre die rotatorische Achse nicht erforderlich. Hinsichtlich der dem zweiten Eingriffsbereich zur Verfügung stehenden gleichen Bewegungsachsen ist vorgesehen, daß die rotatorische Achse wie auch die dritte Linearbewegungsachse, sofern zur Positionierung des ersten Eingriffsbereichs vorhanden, nicht zu den verfügbaren gleichen Bewegungsachsen für den zweiten Eingriffsbereich gehören müssen, es bevorzugt aber sein können, insbesondere im Falle einer Bewegungs- und/oder rotatorischen Kopplung von erstem und zweitem Eingriffsbereich.

Des Weiteren ist in einer besonders bevorzugten Verfahrensgestaltung vorgesehen, daß eine Orientierung einer der Stirnfläche der Werkstückverzahnung an der bewegungsauslaufenden Seite im zweiten Bearbeitungseingriff zugewandte werkzeugseitige Stirnfläche an die Orientierung der Werkstückstirnfläche angepaßt wird, insbesondere durch an die Maschinenachseinstellungen im zweiten Bearbeitungseingriff angepaßte Werkzeugformgebung und/oder durch an die Werkzeugform angepaßten Einstellungen der Maschinenachsen im zweiten Bearbeitungseingriff. Die "und"-Variante dieser "und/oder"-Kombination ist dabei so zu verstehen, daß Werkzeugformgebung und Maschinenachseinstellungen im zweiten Bearbeitungseingriff derart aufeinander abgestimmt sind, daß die entsprechende Orientierungsanpassung der einander zugewandten Flächen besteht, diese also insbesondere parallel ausgerichtet sind, um ungewünschte Kollisionen zwischen Werkzeug und Werkstück sowie insbesondere eine Bearbeitung in die Zahnflanken hinein zu vermeiden.

In einer zweckmäßigen Ausführungsform kann noch vorgesehen werden, daß eine Kontaktherstellung des zweiten Bearbeitungseingriffs sensorisch erfaßt wird. Dies könnte beispielsweise über einen Geräuschemissionen erfassenden Akustiksensor geschehen, oder über eine Erfassung der an Zustell- oder Drehachsen anfallenden Leistungsaufnahme, oder über eine Analyse des Schwingungsverhaltens der Maschine. Beispielsweise bei axialer Annäherung des zweiten Eingriffsbereichs an die zu bearbeitende Verzahnungsstirnseite kann ein weiterer axialer Vorschub dann rechtzeitig gestoppt werden.

Hinsichtlich geeigneter Werkzeuge zur Durchführung eines Verfahrens nach einem oder mehreren der oben erläuterten Aspekte betrifft die Erfindung auch eine Werkzeuganordnung gemäß dem unabhängigen Anspruch 22.

Die Vorteile der erfindungsgemäßen Werkzeuganordnung ergeben sich aus den Vorteilen der oben erläuterten Verfahrensgestaltungen. In diesem Zusammenhang kann vorgesehen sein, daß der zweite Eingriffsbereich durch die Schneidradverzahnung an dessen zweiter Stirnseite gebildet ist. Die Werkzeuganordnung kann in diesem Fall als Einzelwerkzeug (mit zwei unterschiedlichen Eingriffsbereichen) gebildet sein.

Alternativ (oder zusätzlich) kann vorgesehen sein, daß der zweite (ein dritter) Eingriffsbereich an einem zweiten, von dem ersten Eingriffsbereich aufweisenden Schneidrad axial beabstandeten Werkzeug, insbesondere verzahnten Schneidrad, gebildet ist.

Es versteht sich, daß bei der maschinentechnischen Realisierung die geometrische Gestaltung der Gesamtapparatur z.B. bestehend aus Halter, Werkzeugen, Werkstück, Spannvorrichtungen und Maschinenelementen daraufhin zu prüfen ist, daß es weder im ersten noch im zweiten Bearbeitungseingriff zu unerwünschten Kollisionen zwischen dem Werkstück und dem Werkzeug oder anderen maschinenseitigen Elementen kommt. Dies ist durch geeignete Wahl der Positionierung der Werkzeuge auf dem Halter, deren Durchmesser und einzuhaltende Abstände des ersten und zweiten Eingriffsbereichs jedoch mit einfachen Mitteln zu realisieren.

Im Hinblick auf die oben angesprochene Eignung zur Entgratung an verzahnungsunterbrechenden Nuten wird von der Erfindung ebenfalls und insbesondere als eigenständig schutzwürdig offenbart eine Werkzeuganordnung mit einem an einer ersten Stirnseite Schneidkanten an seiner Verzahnung aufweisenden Schneidrad, mit dem insbesondere im Wälzschälverfahren eine Verzahnung an einem Werkstück erzeugbar ist, und einem starr und um die gleiche Drehachse drehbar mit dem Schneidrad gekoppelten Entgratwerkzeug, insbesondere in Form einer Verzahnung, dessen axiale Abmessung um wenigstens 20% geringer, bevorzugt wenigstens 40% geringer, insbesondere wenigstens 60 % geringer ist als die des Schneidrads, zur Materialüberschußabnahme (bloßes Entgraten) von axialen Seitenbereichen der Werkstückverzahnung.

In einer bevorzugten Ausführungsform kann vorgesehen sein, daß der zweite Eingriffsbereich geschliffen ist. Des Weiteren kann der zweite Eingriffsbereich beschichtet sein, insbesondere vor Beschichtung geschliffen werden. Diese Maßnahmen können sich positiv hinsichtlich eines geringeren Verschleißes des Entgratwerkzeugs auswirken.

Schließlich wird von der Erfindung in maschinentechnischer Hinsicht noch unter Schutz gestellt eine Werkzeugmaschine gemäß Anspruch 26.

Die Maschine kann als Wälzstoßmaschine ausgeführt sein.

In einer bevorzugten Ausgestaltung kann die Werkzeugmaschine genau eine Werkzeugspindel und genau eine Werkstückspindel aufweisen, so dass das Verfahren ggf. mit Werkzeugwechsel mit einer baulich einfachen Maschine durchführbar ist. Daneben ist auch noch an Werkzeugmaschinenvarianten gedacht, bei denen ein Ort des ersten Bearbeitungseingriffes und ein Ort des zweiten Bearbeitungseingriffes sich insoweit unterscheiden, dass eine Umpositionierung des Werkstücks erforderlich ist, mit einer Positioniereinrichtung, die ein aufgespanntes Werkstück insbesondere ohne Änderung seiner Aufspannung von dem Ort des ersten Bearbeitungseingriffs zu dem Ort des zweiten Bearbeitungseingriffs verbringt, etwa durch eine Drehbewegung oder auch durch eine Linearbewegung, die z.B. bei Pick-Up-Maschinen einsetzbar ist, bei denen eine hängende Werkstückspindel linear am Ständer verfährt und die Werkzeugspindeln unten angeordnet sind. Somit ist die Werkzeugmaschine dieses Typs zur Bearbeitung eines Werkstücks an einem Ort im ersten Bearbeitungseingriff und eines anderen Werkstücks an einem anderen Ort im zweiten Bearbeitungseingriff ausgelegt. In einer Ausgestaltung gelangt durch dieses Positionieren eine insbesondere diametral entgegengesetzte zweite Aufspannung an den Ort für den ersten Bearbeitungseingriff. Eine solche Maschine weist wenigstens zwei Werkstückspindeln auf, die z.B. bei der Positionierbewegung der Aufspannungen mitbewegt werden oder vor der Positionierbewegung abgekoppelt und danach angekoppelt werden. Der Positionswechsel könnte aber auch durch ein Be-/Entladesystem erfolgen, bei ortsfesten Spindeln und Aufspannungen.

Als insbesondere werkzeugseitige Maschinenachsen an dem Ort (den Orten) des ersten/zweiten Bearbeitungseingriffes können die oben erläuterten ersten, zweiten und dritten Linearbewegungsachsen und rotatorische Achse herangezogen werden, zusätzlich zu den Drehachsen der jeweiligen Spindeln selbst. Wie üblich können diese Bewegungsachsen mit jeweiligen Antrieben, z.B. in Form von Servoantrieben, insbesondere Direktantrieben CNC-gesteuert über die Steuereinrichtung betätigt werden.

Weitere Merkmale, Einzelheiten und Vorteile der Erfindung ergeben sich aus der nachstehenden Beschreibung mit Bezug auf die beigefügten Figuren, von denen
- Fig. 1a, b und 2a, b: in axialen Schnittansichten eine Positionierbarkeit für den zweiten Bearbeitungseingriff veranschaulichen,
- Fig. 3a bis c: geeignete Werkzeugkonturen für den zweiten Eingriffsbereich im Axialschnitt zeigen,
- Fig. 4: im Axialschnitt einen zweiten Bearbeitungseingriff eines Werkzeugs gemäß Fig. 3b zeigt,
- Fig. 5: einen solchen Bearbeitungseingriff für eine andere Werkstückgeometrie wie die der Fig. 4 zeigt,
- Fig. 6: einen zweiten Bearbeitungseingriff für das Werkzeug aus Fig. 3c zeigt,
- Fig. 7a bis c: verschiedene Relativpositionierungen zwischen einem Tandemwerkzeug und einem Werkstück mit komplexerer Verzahnungskontur zeigt, in verschiedenen entgratenden Bearbeitungseingriffen,
- Fig. 8a bis c: erläuternde Projektionsansichten zur Darstellung einer Einhüllenden von Wälzstellungen eines Zahns und deren Zustandekommen darstellen,
- Fig. 9a bis c: in der gleichen Form der Darstellung der Figuren 8 eine Möglichkeit der gegenseitigen Positionierung von Werkzeug und Werkstück unter Verwendung der Einhüllenden zeigt,
- Fig. 10a bis c: eine Verschiebung der Einhüllenden bezüglich der Werkstückverzahnung entlang einer Bahnkurve zeigt,
- Fig. 11: eine Wälzschälmaschine mit eingezeichneten Bewegungsachsen zeigt, und
- Fig. 12: ein alternatives Maschinenkonzept zu dem von Fig. 11 schematisch zeigt.

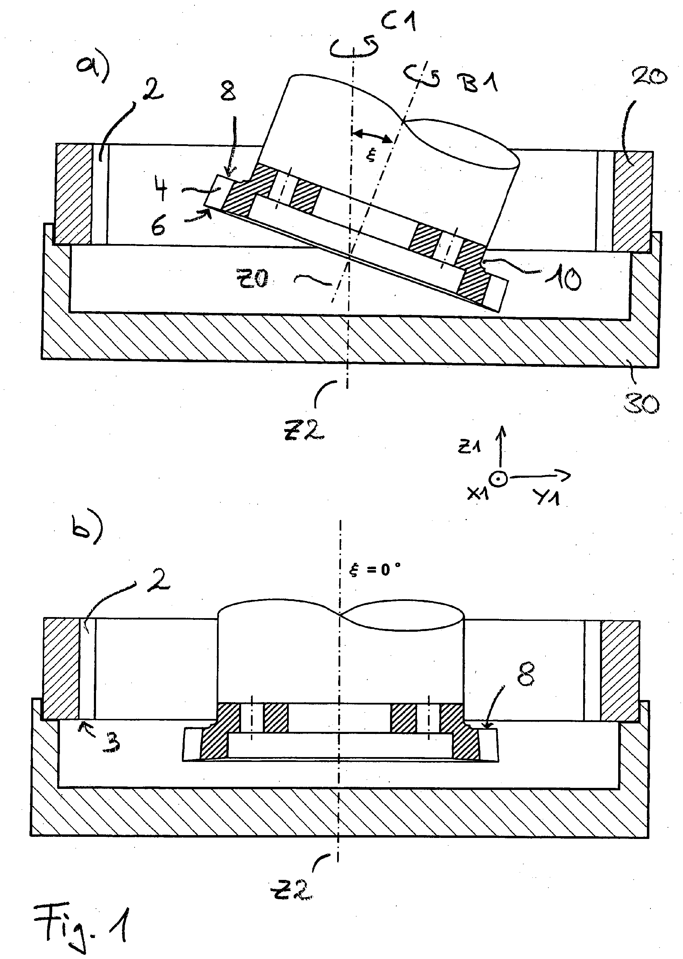

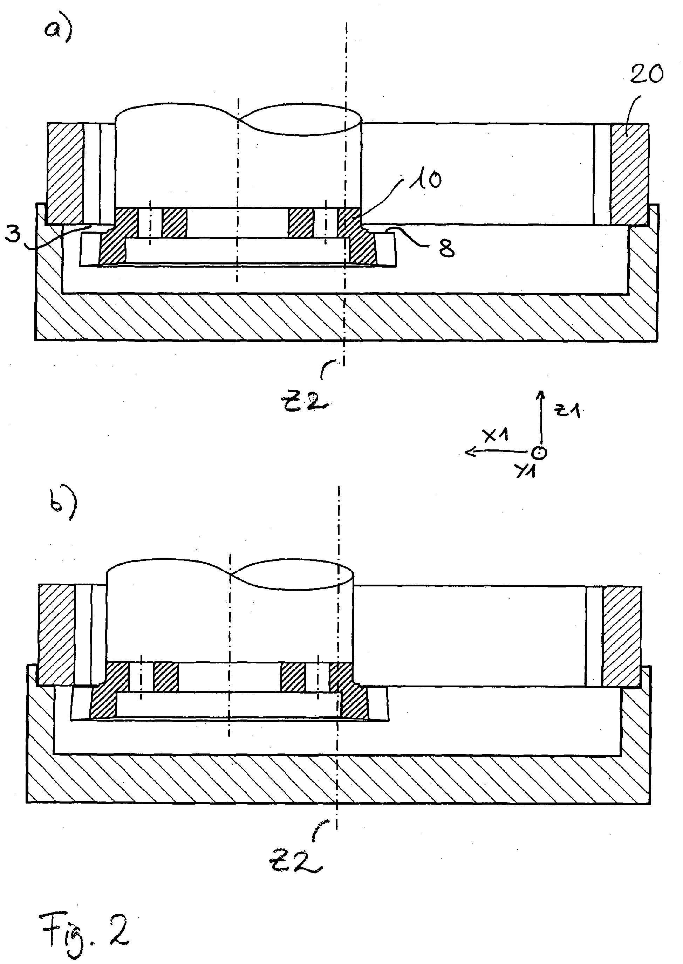

Eine Ausgestaltung des erfindungsgemäßen Verfahrens ist in Fig. 1 und Fig. 2 dargestellt. Gemäß Fig. 1a ist ein Werkstück 20 in Form eines innenverzahnten Zahnrades mit Innenverzahnung 2 versehen. Während der Erzeugung der Verzahnung 2 ist das Werkstück 20 in üblicher Art und Weise auf einer Werkstückspindel mit Drehachse C1 aufgespannt, mit in diesem Ausführungsbeispiel vertikal verlaufender Werkstückachse Z2. Einzelheiten zur Aufspannung sind der Übersichtlichkeit halber nicht dargestellt, das Werkstück 20 erscheint lediglich auf einer Auflage 30 der Werkstückaufspannung.

Die Innenverzahnung 2 wird mit einem Schälrad 10 erzeugt, welches bezüglich seiner Radachse Z0 an seiner aufspannungsfernen Umfangsfläche eine Verzahnung 4 aufweist. Im (ersten) Bearbeitungseingriff mit dem Werkstück 20 zur Erzeugung der Verzahnung 2 rotiert das Schälrad 10 um die mit der rotatorischen Drehachse B1 einer nicht dargestellten Werkzeugspindel zusammenfallende Radachse Z0 in Wälzkopplung mit der Rotation des Werkstücks 20 um die Werkstückachse Z2.

Die Blickrichtung der Darstellung von Fig. 1a ist die einer radialen Achse X1, bezüglich der Werkzeugs 10 und Werkstück 20 gegeneinander zur Einstellung eines gewünschten Achsabstandes gegeneinander beweglich sind. Man erkennt in Fig. 1 den für das Wälzschälen typischen Achskreuzwinkel ξ. Der Achskreuzwinkel ξ läßt sich durch eine rotatorische Achse A1 einstellen, die in Form einer Drehung um eine Achse parallel oder koaxial zur Radialachse X1 implementierbar ist. Dies ist eine beispielhafte Darstellung. Das Wälzschälen (Power Skiven) kann auch mit einem Seitenversatz durchgeführt werden und/oder mit einem zylindrischen Werkzeug durchgeführt werden.

An der aufspannungsfernen Stirnseite der Schälradverzahnung 4 bilden deren Zahnkanten 6 den beim Wälzschälen der Verzahnung 2 schneidend wirkenden Eingriffsbereich. Während der Erzeugung der Verzahnung 2 wird das Schälrad 10 in einem oder mehreren Hüben nach entsprechender radialer Zustellung entlang der Werkstückachse Z2 vorgeschoben, zur bewegungsauslaufenden Seite der Verzahnung 2 hin, in dem in Fig. 1 dargestellten Fall von oben nach unten entlang der Werkstückachse Z2. Diese bewegungsauslaufende axiale Stirnseite der Verzahnung 2 ist in Fig. 1b mit dem Bezugszeichen 3 bezeichnet.

Das Schälrad 10 ist derart ausgelegt, daß damit in einem zweiten Bearbeitungseingriff eine Bearbeitung der bewegungsauslaufenden Seite 3 der Verzahnung 2 zum Abscheren der an dieser Verzahnungsseite 3 überstehenden Grate erfolgt. Dazu kann, wie in diesem erläuternden Ausführungsbeispiel gezeigt ist, durch Einstellung der rotatorischen Bewegungsachse A1 das Schälrad 10 aus der in Fig. 1a gezeigten Lage, die der unteren Hublage beim Erzeugen der Verzahnung 2 entspricht, in die in Fig. 1b gezeigte Lage gebracht werden, mit Achskreuzwinkel ξ = 0°. Dies hat zur Folge, daß ein zweiter Eingriffsbereich des Schälrads 10 in Form der Verzahnung 4 an der schälradsaufspannungsseitigen anderen Stirnseite 8 orthogonal zur Werkstückachse Z2 orientiert ist, also parallel zur planar geformten bewegungsauslaufenden Seite 3 der Verzahnung 2. Auf diese Weise wird sichergestellt, daß nur die Grate abgeschert werden, ohne weitergehende Kollision mit den Zahnkanten der Verzahnung 2.

Die in Fig. 1 gezeigte Lage des Schälrads 10 gegenüber dem Werkstück 20 ist in Fig. 2a nochmals in einer Schnittansicht wiedergegeben, in der die Papierebene allerdings durch die Achsen Z2 und die radiale Zustellachse X1 gegeben ist. In der Darstellung von Fig. 2a ist das Schälrad 10 gegenüber dem Werkstück 20 durch eine radiale (X1) Zustellbewegung bereits so positioniert, daß bei noch bestehendem Abstand zwischen den sich in dem in Fig. 2a linken Bereich gegenüberliegenden Stirnseiten 3 der Verzahnung 2 und 8 der Schälradverzahnung 4 der Kopfkreis der Verzahnung 4 an der Stirnseite 8 über den Fußkreis der erzeugten Verzahnung 2 in überlappender Weise hinausgeht. Wird nun das Schälrad 10 parallel zur Werkstückachse Z2 auf das Werkstück 20 zu bewegt, gelangt man von der in Fig.2a gezeigten Relativlage in die in Fig. 2b gezeigte Relativlage, in der die rückseitige Stirnseite 8 der Schälradverzahnung 4 (zweiter Eingriffsbereich) und die Stirnseite 3 der Verzahnung 2 in einen Bearbeitungseingriff (zweiter Bearbeitungseingriff) gelangen, bei dem die Grate an der unteren Stirnseite 3 der Verzahnung 2 abgeschert werden. Mithin gelingt das Entgraten der unteren Stirnseite 3 in der Verfahrensgestaltung dieses Ausführungsbeispiels mit dem gleichen Werkzeug, das auch mit den schneidenden Zahnkanten 6 an der vorderen Stirnseite der Schälradverzahnung 4 (erster Eingriffsbereich) die Verzahnung 2 erzeugt (erster Bearbeitungseingriff).

Die zur Positionierung des Schälrads 10 in die in Fig. 2b gezeigte Lage für die Entgratbearbeitung ist über eine bereits vorliegende Steuerinformation für die Z2-achsparallele Bewegung möglich. Alternativ könnte auch der Entgrateingriff sensorisch festgestellt werden, beispielsweise über einen akustischen Sensor oder einen anhand der über die Spindelachsen B1 oder C1 oder die Vorschubachse erkennbaren Abtragleistung durch das Entgraten, oder auch über eine Analyse des Schwingungsverhaltens der Maschine.

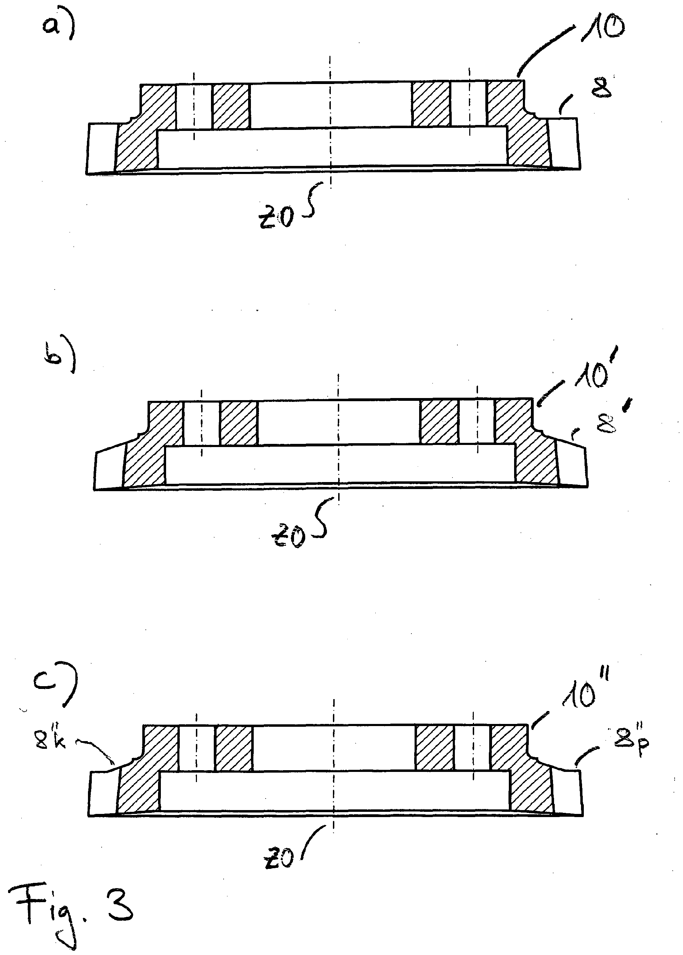

Bevor weitere Erläuterungen zu weiteren Gesichtspunkten des Entgratprozesses vertieft werden, werden anhand der Figuren 3a bis c noch weitere Schälradgestaltungen erläutert.

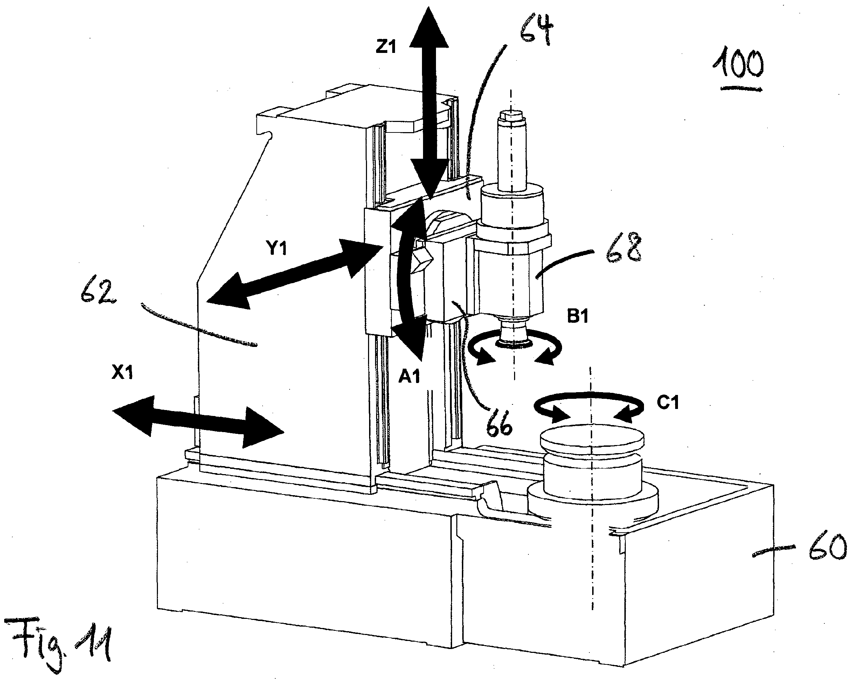

So zeigt Fig. 3a im Axialschnitt das bereits in Fig. 1 und 2 dargestellte Schälrad 10, bei dem die rückseitige Stirnfläche 8 der Verzahnung 4 planar, also orthogonal zur Schälradachse Z0 gebildet ist. Diese Konfiguration eignet sich besonders gut für ein Entgraten bei Achskreuzwinkel ξ = 0°, beispielsweise in dem in Fig. 2b dargestellten Bearbeitungseingriff, der bezüglich der Achsen der Werkzeugmaschine, in der das Verfahren ausgeführt wird, auftritt, wenn die Schälradachse Z0 bezüglich der verfügbaren Radialbewegungsachse X1 mit der Werkstückachse Z2 fluchtet (λ = 0°-Position), allerdings auch in einer anderen Winkelposition (λ) bezüglich der Verbindungsrichtung beider Drehachsen zu der radialen Bewegungsachse X1. Eine derartige Lage kann auch durch eine tangentiale Bewegungsachse Y1 realisiert werden, die orthogonal zur radialen Bewegungsachse X1 verlaufen kann und bei einem auf ξ = 0 eingestellten Achskreuzwinkel bevorzugt auch orthogonal zu einer Linearbewegungsachse Z1 verlaufen kann, über welche das Schälrad 10 werkstückachsparallel bewegbar ist und welche insbesondere parallel zur Werkstückachse Z0 verläuft (siehe auch Fig. 11).

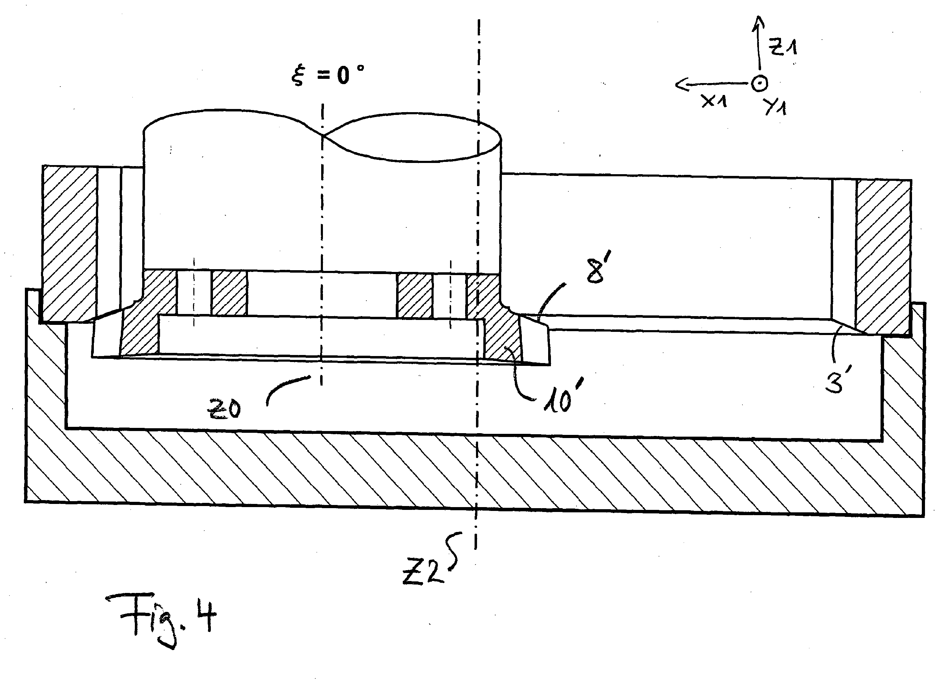

In Fig. 3b ist ein weiteres Schälrad 10' im Axialschnitt dargestellt, dessen rückseitige Stirnfläche 8' unter einem Winkel gegenüber der Schälradachse Z0 gebildet, z.B. geschliffen ist, der von 90° abweicht. Ein derart gestaltetes Schälrad kann besonders dann vorteilhaft eingesetzt werden, wenn eine bewegungsauslaufende Stirnseite 3' der herzustellenden Verzahnung ebenfalls eine Neigung gegenüber der Ebene senkrecht zur Werkstückachse Z2 aufweist, wobei bevorzugt die Neigung der schälradseitigen Stirnfläche 8' an die der werkstückseitigen Stirnseite 3' angepaßt ist, wenn in der ξ = 0°-Position entgratet werden soll, wie in Fig.4 gezeigt ist.

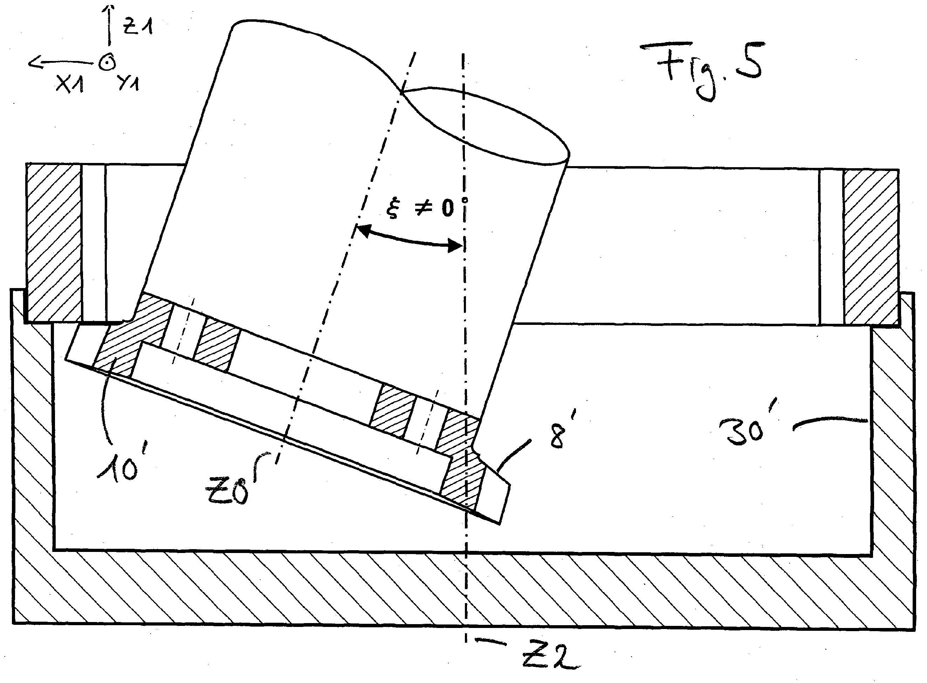

Andererseits ist es durchaus auch möglich, das in Fig. 3b dargestellte Schälrad 10' zum Entgraten planarer Werkstückverzahnungsseiten 3 einzusetzen, indem eine kollisionsvermeidende Orientierung der in Eingriff stehenden Flächen 8' und 3 über eine passende Einstellung des Achskreuzwinkels £ beim Entgraten vorgenommen wird. Dies ist in Fig. 5 dargestellt, die von der Blickrichtung her Fig. 1a entspricht, das Schälrad 10' also in einer Winkelposition λ = 90° zeigt. Zu berücksichtigen bei dieser Verfahrensgestaltung ist ein größerer Raumbedarf unterhalb des Werkstücks 20, der über einen entsprechend tiefer liegenden Boden der Auflage 30' realisierbar ist. Vorteilhaft ist, daß hier zwischen dem Wälzschälen und dem Entgraten eine Änderung des Achskreuzwinkels ξ entbehrlich ist.

Man erkennt, daß die Gestaltung des zweiten Eingriffsbereichs, in diesem Fall der rückseitigen Stirnseite 8 des Schälrads dazu genutzt werden kann, passende kollisionsfreie Lagebeziehungen zwischen den beim zweiten Bearbeitungseingriff (hier dem Entgraten) einander zugewandten Flächen 3, 8 von Werkstück und Werkzeug zu schaffen. Des Weiteren ist aus einem Vergleich der Figuren 4 und 5 erkennbar, daß auch auch Achseinstellungen zum Erreichen der kollisionsfreien gegenseitigen Lage dieser Flächen 3, 8 einsetzbar sind. Nicht dargestellt, aber ebenso möglich ist eine Kombination dieser Varianten, in der z.B. eine Fläche 3 geneigt oder eben teilweise durch eine Neigung der rückseitigen Stirnseite 8 der Schälradverzahnung 4 und teilweise durch Einstellung eines Achskreuzwinkels erreichbar ist. Für das Wälzstoßen würde man die in Fig. 4 gezeigte Variante bevorzugen.

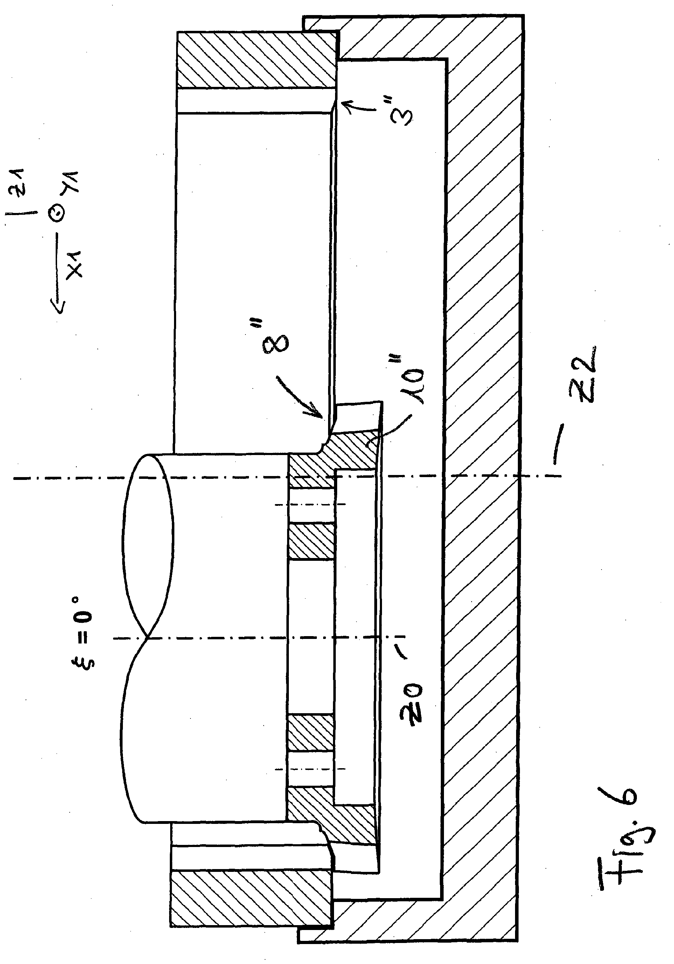

Fig. 3c zeigt noch eine weitere Variante, in der mit Blick auf eine in Fig. 6 dargestellte Eingriffssituation der bewegungsauslaufenden Stirnseite 3" der Werkstückverzahnung 2 die rückseitige Stirnseite 8" abschnittsweise angepaßt ist, wobei in diesem darstellenden Ausführungsbeispiel ein äußerer Abschnitt 8"p planar gebildet ist, während ein daran anschließender Abschnitt 8"k konisch ist, um den in Fig. 6 gezeigten zweiten Bearbeitungseingriff kollisionsfrei auszuführen, indem die Neigung des zweiten Abschnitts 8"k dem des inneren Abschnitts der unteren Stirnseite 3" angeglichen ist.

Wie weiter aus den Figuren 4, 5 und 6 ersichtlich ist, ist ein ausreichender Abstand zwischen dem Montageansatz des Schälrads 10 und dem Fußkreis der Verzahnung 4 an der rückseitigen Stirnfläche 8 zu schaffen, um beim entgratenden Bearbeitungseingriff Kollisionen mit der Werkstückverzahnung 2 zu vermeiden.

Die in den Figuren 3a bis 3c dargestellten Schälräder 10, 10' und 10" sind konisch geformt, man könnte allerdings ebenfalls zylindrische Schälräder verwenden. Die Verzahnung an der den Eingriffsbereich für das Erzeugung der Verzahnung 2 bildenden Seite der Schälradverzahnung 4 mit den schneidenden Zahnkanten 6 kann bei Schrägverzahnung des Schälrades wie üblich auch im Treppenschliff gebildet sein, die Erfindung ist diesbezüglich nicht weitergehend eingeschränkt.

Der zweite Eingriffsbereich, in dem Beispiel der Fig. 3 die rückseitigen Stirnflächen 8, 8', 8" der Schälradverzahnung 4, können für ein vorteilhaftes Entgratergebnis geschliffen sein und überdies mit einer Schutzschicht versehen sein, um die Dauerhaftigkeit des zweiten Eingriffsbereichs zu erhöhen. Auch können die an der rückseitigen Stirnseite 8 gebildeten Zahnkanten verrundet sein, um deren Abnutzung zu vermindern.

Unabhängig davon, ob konische oder zylindrische, gerad- oder schrägverzahnte Schälräder verwendet werden, ist es bevorzugt, daß die bei herkömmlichen Schälrädern am Außendurchmesser zur Rückseite des Schälrads hin gebildete Fase nicht vorhanden ist, sondern sich vielmehr der Außendurchmesser entlang einer Geraden erstreckt, wenn im Verlauf entlang der Schälradachse betrachtet, da eine solche Fase den beabsichtigten Entgratverlauf erschweren würde.

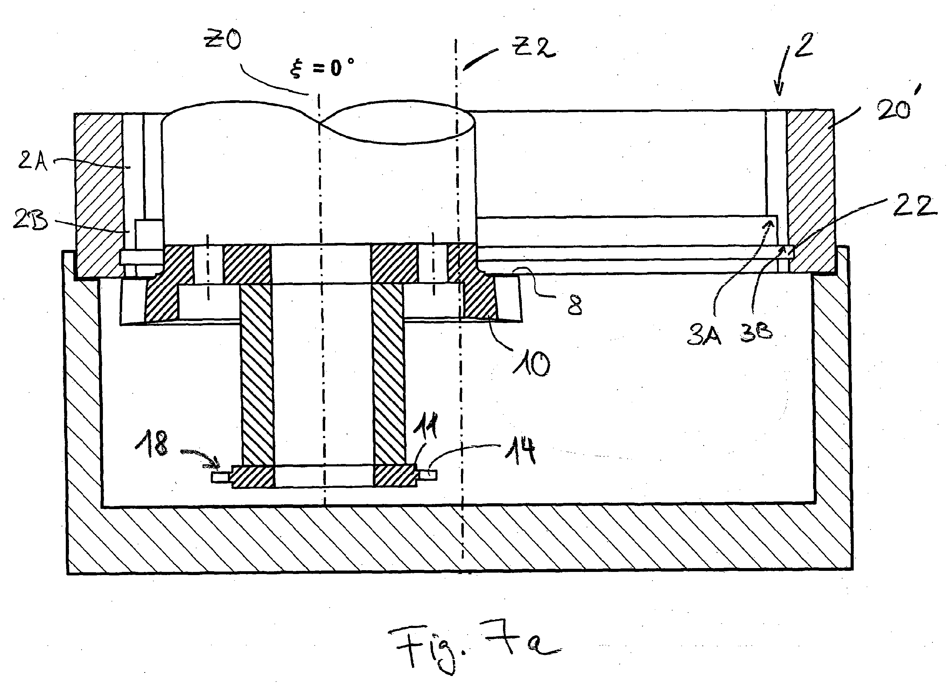

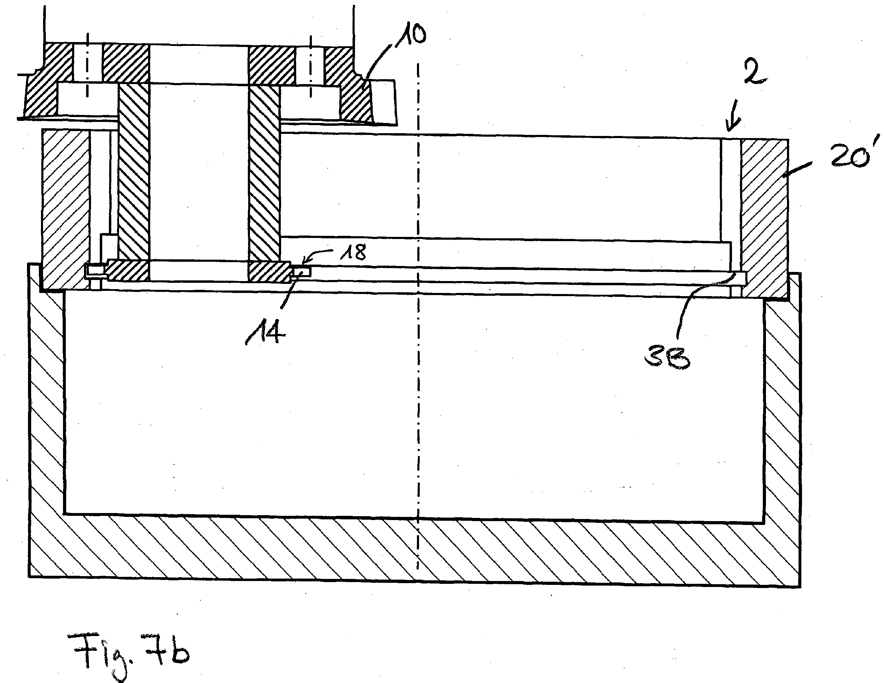

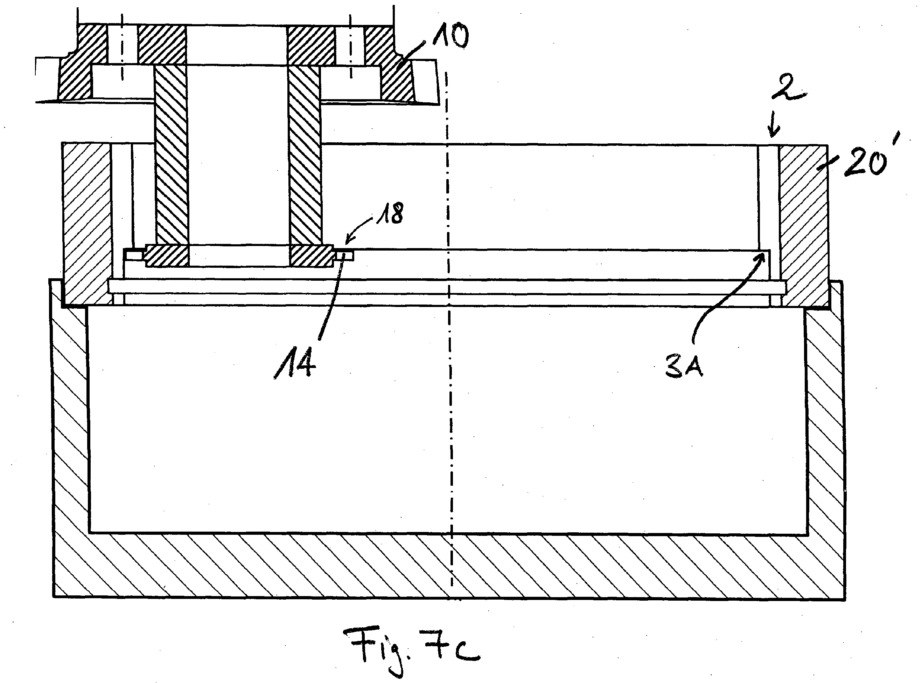

In einer weiteren, in den Figuren 7a, 7b und 7c im Axialschnitt dargestellten Ausführungsform ist das Werkzeug als Tandemwerkzeug ausgebildet und weist zum einen ein Schälrad 10 auf, das z.B. die Gestalt der in den Figuren 3a bis 3c gezeigten Schälrädern annehmen kann, in dem in den Figuren 7a bis 7c gezeigten Ausführungsbeispiel wird etwa die Variante der Fig. 3a herangezogen, und zum anderen ein von diesem Schälrad 10 beabstandetes weiteres Entgratwerkzeug 11, wobei das Tandemwerkzeug 10, 11 eine bezüglich gemeinsamer Drehung starr gekoppelte Werkzeuganordnung darstellt. So könnte an dem Entgratwerkzeug 11 beispielsweise eine zweite Verzahnung vorgesehen werden, die werkzeugaufspannungsnäher als das Schälrad selbst angeordnet ist (nicht dargestellt), also eine Verzahnung unabhängig von der Schälradverzahnung 4, die den ersten Eingriffsbereich trägt. Dann ist eine unabhängige Verzahnungsgestaltung möglich, so daß die beiden Eingriffsbereiche unabhängig voneinander für den jeweiligen Bearbeitungseingriff optimierbar sind. Beispielsweise könnte der rückseitige entgratende Bereich am Umfang konisch angeschliffen und/oder an der Stirnseite konkav hinterlegt werden, um eine geeignete Entgratgeometrie zu schaffen. Denkbar ist auch, daß ein solcher werkzeugaufspannungsnäherer zweiter Eingriffsbereich nicht verzahnt ist, sondern z.B. eine unverzahnte Entgratscheibe bildet.

Andererseits ist auch die in den Figuren 7 a-c dargestellte Situation denkbar, in der durchaus der zweite Eingriffsbereich an der Rückseite 8 der Schälradverzahnung 4 angeordnet sein kann, die an der Vorderseite den ersten Eingriffsbereich trägt, und das zweite Werkzeug 11 des Tandemwerkzeugs (der Werkzeuganordnung) axial vom ersten Eingriffsbereich beabstandet vorgesehen ist, allerdings zur aufspannungsfernen Seite hin. Dieses zweite Werkzeug könnte etwa scheibenförmig gebildet sein, insbesondere auch eine Verzahnung tragen. So ist beispielsweise das in Fig. 7a dargestellte Entgratwerkzeug 11 mit einer Verzahnung 14 ausgestattet, die bezüglich der Werkzeugachse Z0 eine deutlich geringere Abmessung aufweist als die Schälradverzahnung 4. Dies ermöglicht auch ein Entgraten an der auslaufenden Seite 3B eines Verzahnungsabschnitts 2B, die dadurch entsteht, daß die Verzahnung 2 des Werkstücks 20' durch eine Nut 22 unterbrochen ist, siehe Fig. 7b. Auch können auslaufende axiale Stirnseiten 3A dort bearbeitet werden, wo die Verzahnung 2 des Werkstücks 20' von einem Abschnitt höherer Verzahnung 2A zu dem Abschnitt tieferer Verzahnung 2B übergeht. Der zweite Eingriffsbereich für diese (zusätzlichen) Grate ist die in Fig. 7a obere Stirnseite 18 der Verzahnung 14. Dies ist in Fig. 7c dargestellt.

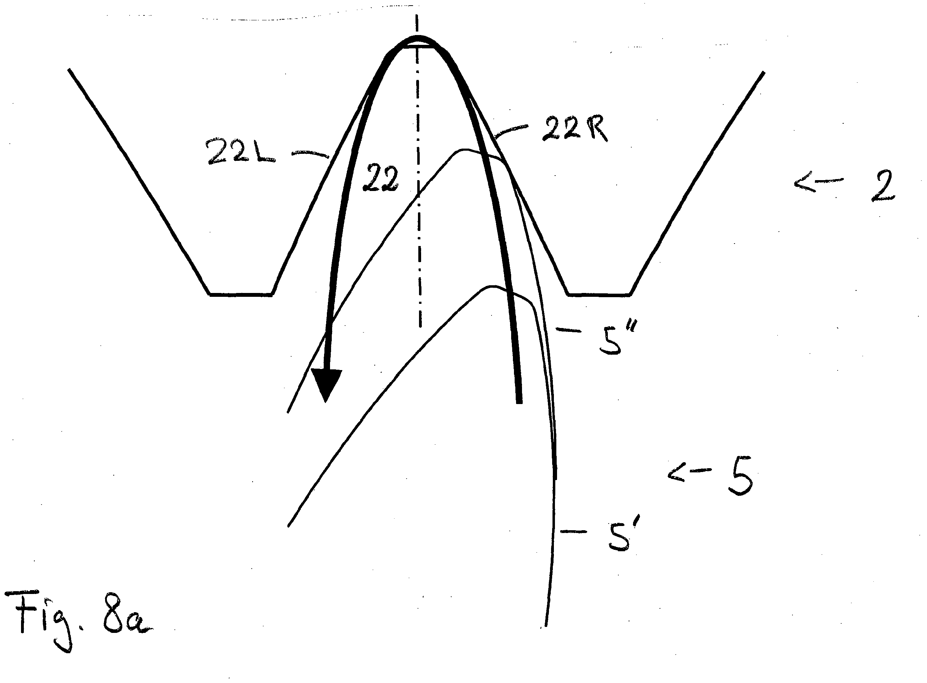

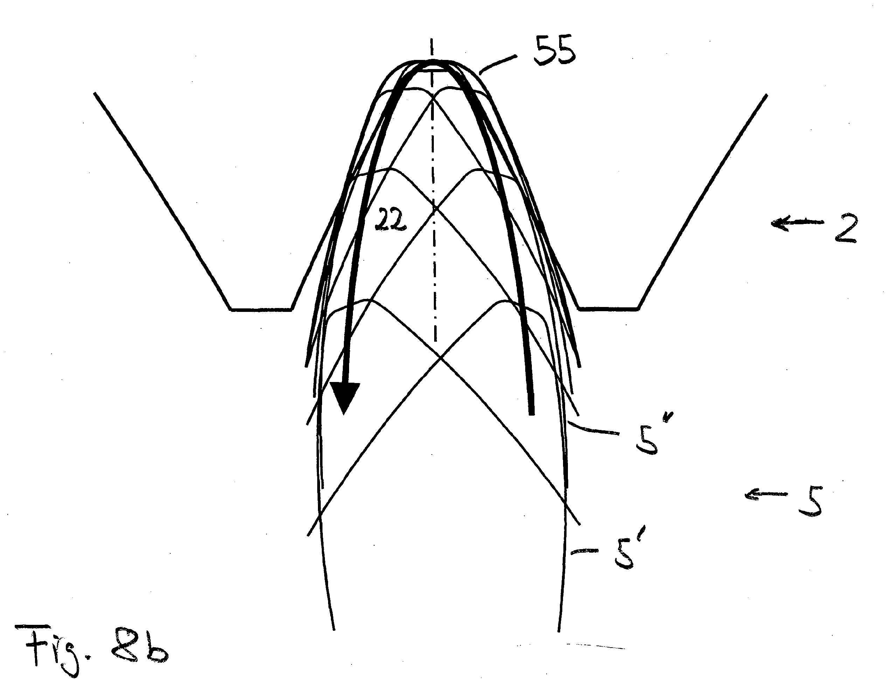

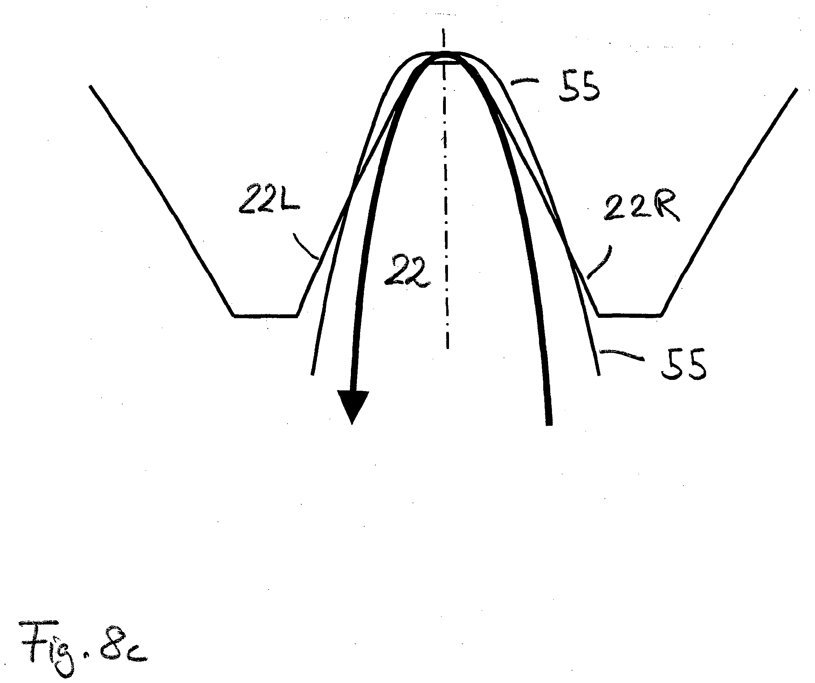

Die Figuren 8a bis c verdeutlichen schematisch die Entstehung eines Überlappungsbereichs für einen das Entgraten erlaubenden zweiten Bearbeitungseingriff. So deutet Fig. 8a die Wälzbewegung eines Zahnes 5 einer entgratenden Verzahnung an, betrachtet aus Sicht einer Lücke 22 einer Werkstückverzahnung 2, die hier eine Innenverzahnung ist. Die Drehrichtung von Entgratwerkzeug und Werkstück ist dem Uhrzeigersinn entgegengerichtet. Diese Darstellung in Projektion auf eine Normalenebene zur Werkstückachse verdeutlicht (Fig. 8b), daß die Momentanaufnahmen 5', 5", ... des Zahns 5 während der Wälzbewegung eine einhüllende Kurve 55 bildet, die sich aus der Außenkontur aller Wälzstellungen 5', 5", ... bezüglich der Lücke 22 erschließt. Diese einhüllende Kurve 55 ist in Fig. 8c alleine, d.h. ohne die Darstellung der einzelnen Wälzstellungen 5', 5", ... des Zahns 5 dargestellt.

Es ist erkennbar, daß durch eine Relativpositionierung der einhüllenden Kurve 55 gegenüber der Lücke 22 der Verzahnung 2 ein Überlappungsbereich von Einhüllender 55 und Zahnprofil variiert werden kann, und somit in einem jeweiligen Bereich der Verzahnung ein Entgraten an deren Stirnseite erlaubt. Durch Änderung der Relativpositionierung läßt sich der Überlappungsbereich beispielsweise sukzessive verschieben, wodurch die Stirnseite und die Zahnlücke 22 vollständig entgratet werden kann.

Im Folgenden werden einige Varianten angesprochen, über die der zweite Bearbeitungsgriff und die Schaffung eines jeweiligen Überlappungsbereichs der einhüllenden Kurve 55 herstellbar ist. Zur Vereinfachung der Darstellung wird dabei nicht mehr auf die einzelnen Wälzstellungen 5', 5", ... eines entgratenden Zahns 5 zurückgegriffen, sondern auf die durch die Wälzbewegung des Zahns 5 gebildete einhüllende Kurve 55.

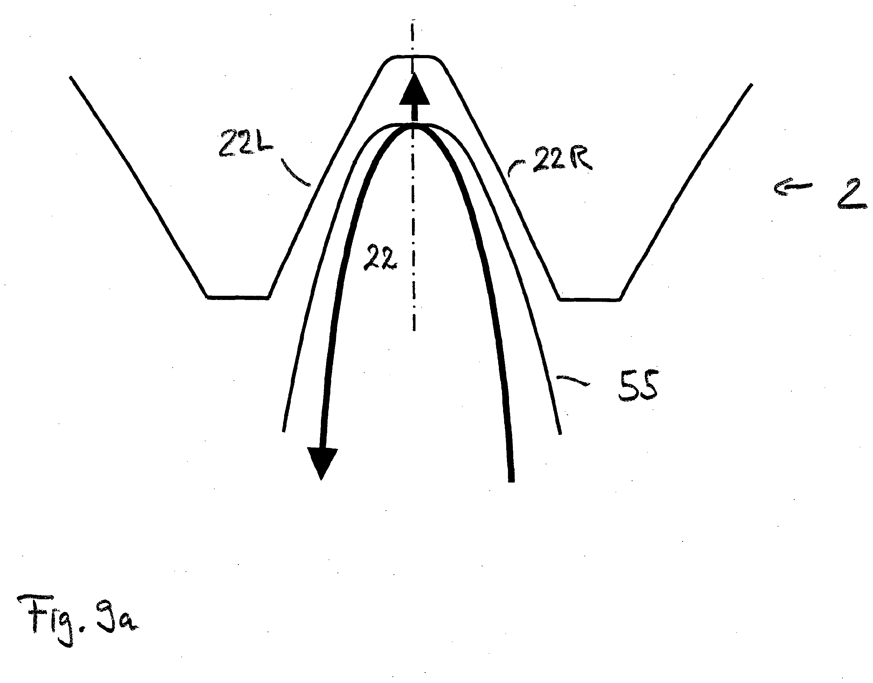

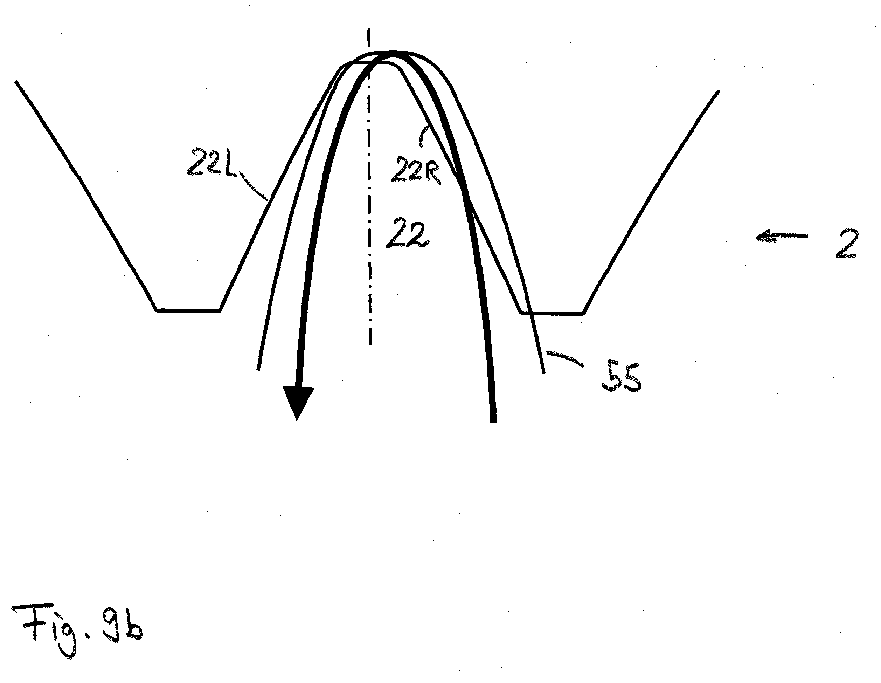

So zeigt beispielsweise Figur 9a eine Positionierung der einhüllenden Kurve 55 durch radiale Zustellung des Entgratwerkzeugs gegenüber der Lücke 22 der Verzahnung 2 in der gleichen Darstellung wie der der Figuren 8a bis 8c, wobei die entgratende Werkzeugstirnseite beabstandet der zu entgratenden Verzahnungsstirnseite 3 dieser gegenüberliegt. Aus einer der Figur 8c entsprechenden Zwischenposition (Kopfkreis Werkzeug überlappt Fußkreis Werkstück, Fußkreis Werkzeug überlappt Kopfkreis Werkstück nicht) heraus folgt eine Verschiebung der einhüllenden Kurve 55 gegenüber der Zahnlücke 22 derart, daß die in Fig. 9b dargestellte Lagebeziehung hergestellt wird, bei der der Überlappungsbereich die rechte Flanke 22R der Zahnlücke 22 und einen Teil deren Fußbereiches umfaßt. Die dazu erforderliche Positionierbewegung kann durch Linearbewegungsachsen erreicht werden, beispielsweise durch die tangentiale Linearbewegungsachse Y, oder durch ein Verdrehen von Werkzeug und Werkstück gegeneinander, etwa durch Beaufschlagung einer Zusatzdrehung ΔB1 oder ΔC1 oder einer Kombination dieser Bewegungsarten.

Aufgrund der beibehaltenen rotatorischen Bewegungskopplung der Wälzbewegung von Werkzeug und Werkstück wird in der in Fig. 9b gezeigten Relativlage die zu entgratende Stirnseite 3 der Verzahnung 2 an allen Zahnkanten der rechten Flanken entgratet, sobald die entgratende Werkzeugstirnseite 8 mit der zu entgratenden Werkstückstirnseite 3 durch axiale Annäherung in Eingriff miteinander gelangen, in welchem die Grate abgeschert werden. Diese Darstellungen sind zu Erläuterungszwecken etwas vereinfacht. So wird nicht weiter auf die sich dem Fachmann erschließende Änderung der Einhüllenden bei Änderung des Achsabstandes aufgrund des geänderten Wälzkreisdurchmessers eingegangen.

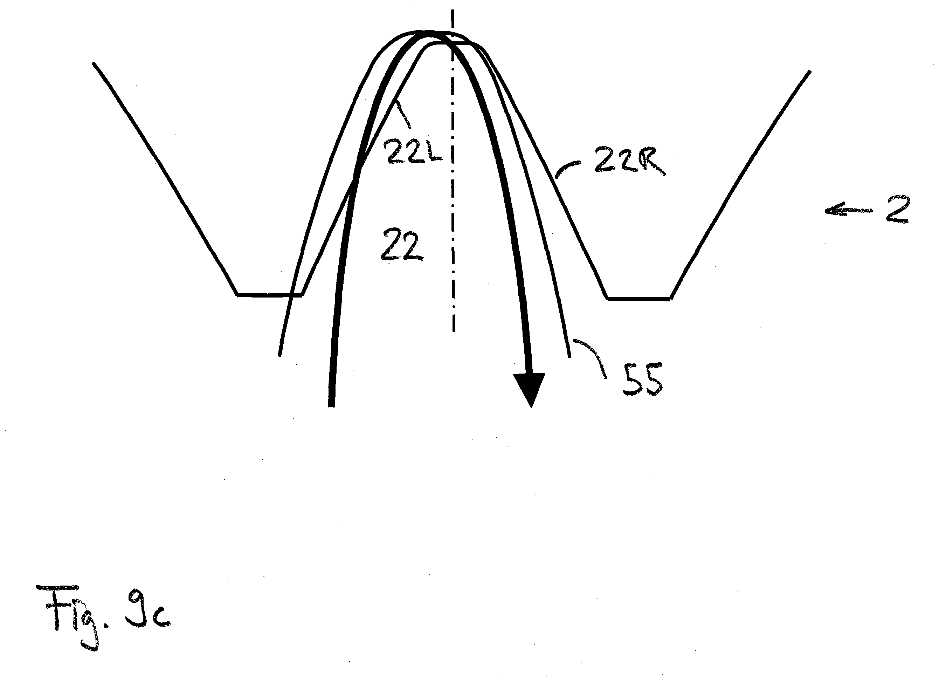

Anschließend könnte auf gleichem Wege das Entgraten der Verzahnungsstirnseite 3 an den linken Flanken 22L (und dem linksseitigen Flankenfußbereich) erfolgen, wie in Fig. 9c dargestellt ist, indem der Überlappungsbereich gegenüber den Figuren 8c nicht nach rechts, sondern nach links verschoben wird, mit den bezüglich der Beschreibung der Fig. 9b angegebenen Bewegungsachsen. Es ist erkennbar, daß auf diese Weise eine jeweils ausreichende Überlappung der Einhüllenden 55 der Wälzbewegungsstellungen 5', 5", ... eines Werkzeugzahns 5 mit der jeweiligen Flanke 22R, 22L und dem Fußgrund der zu entgratenden Stirnseite 3 der Verzahnung 2 erreicht wird, so daß der dort als Materialüberstand vorhandene Grat vollständig abgeschert wird. Gegebenenfalls ist eine gewisse Verweilzeit des Werkzeuges in der jeweiligen Entgratposition vorzunehmen. Natürlich kann die Reihenfolge rechte Flanke- linke Flanke umgekehrt werden, auch die genaue Art und Weise der Verschiebung ist modifizierbar. Auch die Drehrichtungen von Verzahnung 2 und Werkzeug können jeweils umgekehrt werden.

Die Abscherbewegung für das Entgraten wird dabei bevorzugt derart eingestellt, daß eine in der Papierebene der Figuren 8 und 9 liegende und normal zur Verzahnungsflanke der Werkstückverzahnung stehende Bewegungskomponente der Abscherbewegung von der Lücke der Verzahnung 2 weg gerichtet ist, also von der Lücke zum Verzahnungsmaterial hin abgeschert wird. Dazu kann vorgesehen werden, die Drehrichtung von Werkzeug und Werkstück jeweils umzudrehen, bevor die in Fig. 9c dargestellte Relativlage eingenommen wird.

Anstelle einer erneuten radialen Zustellung für die anderen Flankenseiten könnte man zwischen dem Entgraten zur Seiten der linken und rechten Verzahnungsflanken 22L, 22R auch direkt zwischen den beiden in den Figuren 9b und 9c gezeigten Relativlagen übergehen, wobei während dieses Wechsels der Entgratpositionen bevorzugt ein axiales Abheben der in Eingriff stehenden Stirnseiten 3, 8 voneinander erfolgt. Es versteht sich, wie auch bereits mit Bezug auf die anhand der Figuren 9a bis 9c gezeigten Variante, daß die Bewegungen "radiale Zustellung" oder "axiale Annäherung" nicht zwingend achsparallel ausgeführt werden müssen, sondern lediglich eine Bewegungsrichtungskomponente in diese Richtungen erfordern. Insbesondere bei geneigter zu bearbeitender Stirnseite 3 kann die Vertikalachse Z1 mit einbezogen werden. Sofern ein Drehrichtungswechsel von Werkstück und Werkzeug nicht erfolgt, können die entgratende Verzahnung 4 und die entgratete Verzahnung 2 gemeinsam im Gegenuhrzeigersinn wie auch im Uhrzeigersinn drehen (bei zu entgratender Innenverzahnung), wobei im Falle einer zu entgratenden Außenverzahnung die Drehrichtungen von Werkzeug und Werkstück einander entgegengesetzt sind, um die Wälzkopplung zu erhalten.

Durch tiefere radiale Zustellung kann der Überlappungsbereich auch soweit vergrößert werden, daß das Entgraten beidseitig der Lücke gleichzeitig erfolgt. Auch kann die Verzahnung des Werkzeuges so angepaßt werden, daß eine komplette Entgratung der gesamten Lücke bereits durch eine radiale Zustellung alleine erzielt wird.

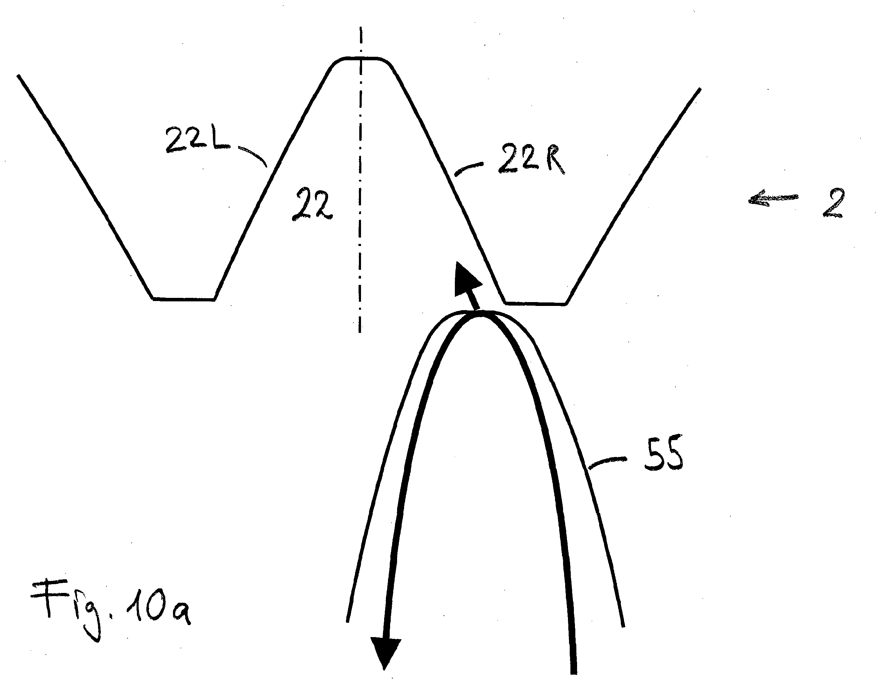

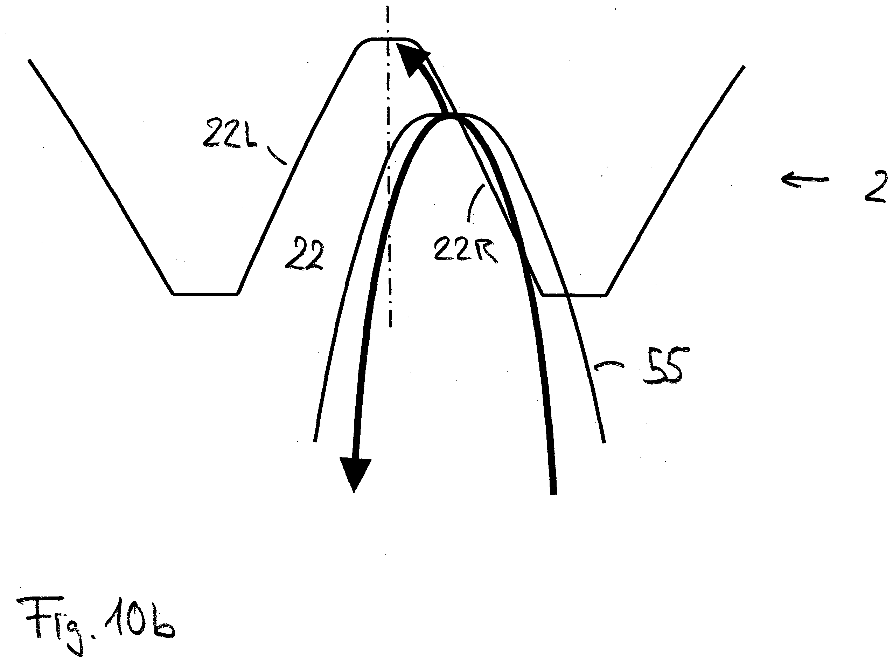

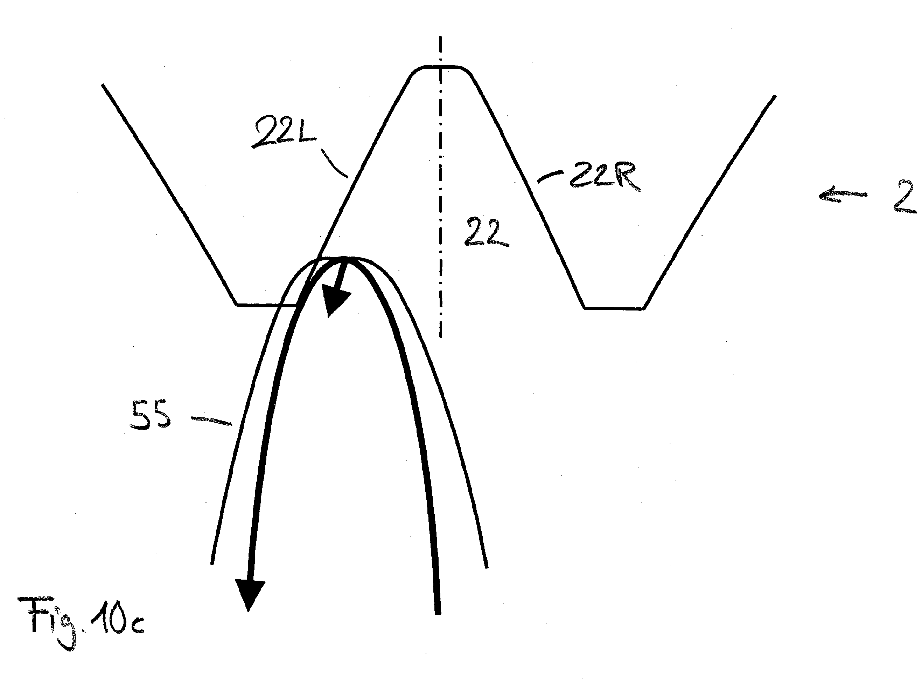

In den Figuren 10a bis 10c ist eine Variante dargestellt, in der man die einhüllende Kurve 55 bezüglich der Lücke 22 der Verzahnung 2 entlang einer vorgegebenen Bahn bewegt. In diesem Ausführungsbeispiel ist die Drehrichtung von Werkzeug und Werkstück entgegen dem Uhrzeigersinn, und durch axiale Zustellung (Z1) werden die sich im Bearbeitungseingriff gegenüberliegenden Verzahnungsstirnseiten 3, 8 auf axiale Bearbeitungsnähe angenähert, und durch die vorhandenen Radial-, Tangential - und/oder Drehbewegungsachsen wird die einhüllende Kurve 55 in die in Fig. 10a gezeigte Lage verschoben, nahe dem Kopfkreis der rechten Flanke 22R der Lücke 22 der Verzahnung 2. Von dort aus "verschiebt" man (geändert wird natürlich die Relativlage zwischen Werkzeug und Werkstück) die Einhüllende parallel zu der zu entgratenden Stirnseite in der Papierebene der Figur 10 entlang der rechten Flanke 22R vom Kopfkreis in Richtung auf den Fußkreis (Fig. 10b), durch den Fußgrund und dann vom Fußgrund der Lücke 22 entlang der linken Flanke 22L wieder in Richtung des Kopfkreises der Verzahnung 2, wodurch die zu entgratende Stirnseite 3 entlang dieser Bewegungsbahn entgratet wird, im kontinuierlichen Verfahren an allen Lücken.

Aus den Figuren 10a bis 10c ist ersichtlich, daß es zur Durchführung einer solchen Bahn Bewegungskomponenten sowohl in radialer (X) als auch tangentialer (Y) Richtung bedarf. Für die tangentiale Richtungskomponente (Y) können jedoch auch die oben erwähnten Zusatzdrehungen ΔB1, ΔC1 herangezogen werden, so daß diese Entgratvariante grundsätzlich auch ohne Einsatz einer dritten Linearbewegungsachse (Y) durchführbar ist. Falls die erforderliche Bahn nicht in einer Ebene orthogonal zur Werkstückdrehachse liegt, steht die Z1-Bewegungsachse zur Verfügung (beispielsweise bei geneigter Werkstückunterseite 3).

Anstelle der anhand der Figuren 10a bis 10c erläuterten Varianten könnte bei diesen durch Verfahren der einhüllenden Kurve 55 entlang einer Bewegungsbahn durchgeführten Entgraten auch ein Durchlaufen der Bahn in umgekehrter Richtung stattfinden, und auch bei jeweils umgekehrter Drehrichtung von Werkstück und Werkzeug, wobei die Abscherbewegungen beim Entgraten wiederum möglichst von der Lücke weg gerichtet sein sollen.

In diesem Zusammenhang läßt sich die anhand der Figuren 10a bis 10c erläuterte Variante noch weitergehend modifizieren, indem zwischen dem Entgraten auf dem ersten Bahnabschnitt (entlang der rechten Flanke 22R) und dem Entgraten auf dem zweiten Bahnabschnitt (entlang der linken Flanke 22L) die jeweilige Drehrichtung von Werkstück und Werkzeug auf den Gegenuhrzeigersinn umgestellt wird. Es ist jedoch auch möglich, im ersten Bewegungsabschnitt im Uhrzeigersinn und dann im zweiten Bewegungsabschnitt im Gegenuhrzeigersinn zu arbeiten. Auch könnte die in den Figuren 10a bis 10c erläuterte Bewegungsbahn in der anderen Richtung durchlaufen werden, also zunächst ein Entgraten entlang der linken Flanke 22L und danach entlang der rechten Flanke 22R vorgenommen werden, mit oder ohne Drehrichtungsänderung.

Des Weiteren ist auch denkbar, die Bewegungsbahn abschnittsweise zu durchlaufen. Beispielsweise könnte man entlang der rechten Verzahnungsflanke 22R beginnend am Fußkreis in Richtung auf den Kopfkreis hin laufen, wie auch entlang der linken Verzahnungsflanke 22L, jeweils im Uhrzeigersinn oder Gegenuhrzeigersinn oder auch mit zwischengeschalteten Drehrichtungsänderungen.

Man erkennt, daß vielfältige Möglichkeiten bestehen, ein verzahntes Entgratwerkzeug in Wälzkopplung mit der zu entgratenden Verzahnung für den Entgratbearbeitungseingriff zu positionieren, so daß ohne Materialabnahme, Verformung oder andere Einwirkung auf die Zahnkanten selbst ein vollständiges Entgraten des Werkstücks an seiner Stirnseite durchgeführt werden kann, insbesondere mit Abscherbewegung weg von der Lücke der entgrateten Verzahnung.

In Fig. 11 ist noch eine Verzahnungsmaschine dargestellt, die zur Ausführung erfindungsgemäßer Varianten ausreichende Maschinenachsen aufweist. Die Verzahnungsmaschine 100, die speziell für das Wälzschälen ausgelegt ist, weist auf ihrem Maschinenbett 60 zum einen eine Werkstückspindel (Tischspindel) mit Drehachse C1 auf, auf der ein außen- oder innenverzahntes Werkstück mit üblichen Spannvorrichtungen aufspannbar ist. Werkzeugseitig ist ein auf dem Maschinenbett 60 in radialer Richtung X1 beweglicher Radialschlitten 62 vorgesehen, der turmartig aufgebaut ist und an einer der Werkstückspindel zugewandten Seite einen Vertikalschlitten 64 trägt, der gegenüber dem Radialschlitten 62 parallel zur Achse der Werkstückspindel mit Bewegungsrichtung Z1 beweglich ist. Der Vertikalschlitten 64 trägt wiederum einen Tangentialschlitten 66, um eine Achse parallel zur Radialachse X1 drehbar gelagert, so daß durch die Drehbewegung A1 ein Achskreuzwinkel ξ zwischen Werkstückachse und Werkzeugachse einstellbar ist. In der in Fig. 11 dargestellten Drehlage (Schwenkwinkel = 0) steht die Bewegungsachse Y1 des Tangentialschlittens 66 orthogonal zur Radialbewegungsachse X1 und Vertikalbewegungsachse Z1. An dem Tangentialschlitten 66 angeordnet ist ein Werkzeugkopf 68, mit einer eine Drehachse B1 definierenden Werkzeugspindel zur Aufnahme eines Schneidrades, beispielsweise Wälzschälwerkzeugs und/oder eines Entgratwerkzeuges, wobei das Entgratwerkzeug auch als Tandemwerkzeug vorliegen kann.

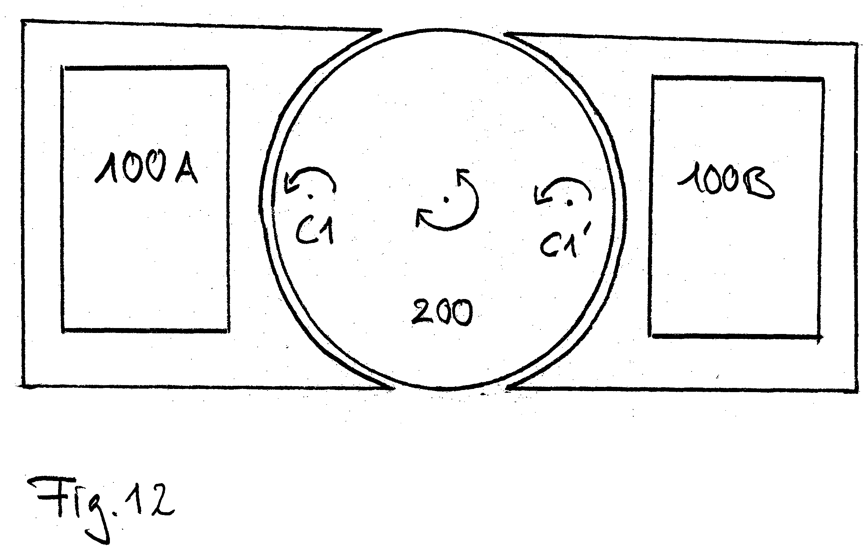

Fig. 12 zeigt noch in einer schematischen Aufsicht eine Maschinengestaltung, in der ein nicht dargestelltes, um die in Fig. 12 dargestellte Drehachse C1 drehbares Werkstück durch ein Werkzeug eines Werkzeugblocks 100A bearbeitet werden kann, der beispielsweise wie der werkzeugseitige Anteil der in Fig. 11 dargestellten Einspindelmaschine aufgebaut sein kann. Bei dieser Ausgestaltung diametral entgegengesetzt ist ein zweiter werkzeugseitiger Block 100B vorgesehen, der funktional wie der Werkzeugblock 100A aufgebaut sein kann, also bezüglich der Lage der in Fig. 12 eingezeichneten Werkstückdrehachse C1' über die gleichen Bewegungsachsen verfügen kann. Durch Drehbarkeit des die Aufspannungen für die Drehachsen C1, C1' aufweisenden und insbesondere die entsprechenden Werkstückspindelachsen drehgekoppelt aufweisende Drehpositioniereinheit 200 um 180° wird in Fig. 12 links beispielsweise das Wälzschälverfahren durchgeführt und dadurch eine Verzahnung an einem Werkstück erzeugt werden, während an der in Fig. 12 rechten Position die Entgratoperation nach einem oder mehreren der oben erläuterten Verfahrensaspekte stattfinden kann. Der Werkzeugblock 100A ist dazu mit einem Wälzschälrad ausgestattet, während der Werkzeugblock 100B mit einem Entgratwerkzeug nach einem der obig erläuterten Entgratwerkzeugkonstellationen ausgestattet ist. Zudem kann eine Steuerung des Werkzeugblocks 100B das Entgratverfahren gemäß einem der obigen Verfahrensaspekte hinsichtlich des Entgratens steuern. Nicht eingezeichnet sind Werkstückwechsler, die beispielsweise so angeordnet werden können, daß die jeweiligen Werkstücke nach dem Entgraten am Werkzeugblock 100B in der Drehstellung des Drehpositioniertellers 200 gewechselt werden, die in der Darstellung von Fig. 12 um die Drehachse C1' aufgespannt sind. Es wäre jedoch in einer Modifizierung ebenso möglich, die Blöcke 100A, 100B nur um 120° gegeneinander versetzt anzuordnen und in der verbleibenden 120°-Position einer 120°-Taktung des Drehpositioniertellers 200 eine Werkstückwechselposition anzuordnen. Ebenso ist es möglich, beispielsweise die Anordnungen der Werkzeugblöcke 100A, 100B in der in Fig. 12 dargestellten diametral gegenüberliegenden Lage beizubehalten, und Werkstückwechsler an den in Fig. 12 nicht besetzten 90°-Drehposition anzuordnen. Da insbesondere ohnehin vorgesehen ist, daß dem Werkzeugblock 100B sämtliche Bewegungsachsen des Werkzeugblocks 100A zur Verfügung stehen, könnte eine derart ausgestattete Maschine auch in einer anderen Betriebsart betätigt werden, in der an beiden Werkzeugblöcken 100A, 100B sowohl die Erzeugung der Werkstückverzahnung (erster Bearbeitungseingriff) als auch das Entgraten (zweiter Bearbeitungseingriff) vorgenommen wird. Je nach Art der zu bearbeitenden Werkstücke und sich daraus ergebendem Verhältnis aus dem für die Erzeugung der Verzahnung erforderlichen Zeitaufwands und dem für das Entgraten erforderlichen Zeitaufwands kann eine derart konfigurierte Maschine bezüglich der Bearbeitung funktional zwei einzelne Maschinen ersetzen, weist diesen gegenüber jedoch noch den Vorteil der über den Drehpositionierteller 200 gekoppelten Be- und Entladung der Werkstücke auf, die zeitparallel zur Bearbeitung anderer Werkstücke an den Werkzeugblöcken 100A, 100B in den 90°-Positionen erfolgen kann, ohne dafür entsprechenden doppelten Raumbedarf zu erfordern. Zum anderen könnte in der zuvor beschriebenen Betriebsart eine unterschiedliche Bearbeitung an den beiden Werkzeugblöcken 100A, 100B vorgenommen werden. In diesem Zusammenhang kann ein Be- und Entladesystem eingesetzt werden, welches sowohl in der 180°-Position als auch der 90°-Position Werkstücke an den Drehpositionierteller 200 übergeben und von ihm empfangen kann.

Die Einzelheiten der obigen Beschreibung anhand der beigefügten Figuren sind nicht als einschränkend für die Erfindung

## Patentansprüche

1. Verfahren zum Bearbeiten eines Werkstücks (20; 20'),
bei dem im Wälzschälverfahren eine Verzahnung (2; 2A, 2B) an dem Werkstück in einem ersten Bearbeitungseingriff erzeugt wird, in welchem ein verzahntes, um seine Drehachse (Z0) rotierendes und an einer ersten Stirnseite Schneidkanten (6) an seiner Verzahnung (4) aufweisendes als Schälrad ausgebildetes Schneidrad (10) in Wälzkopplung mit dem um seine Drehachse (Z2) rotierenden Werkstück steht, und eine eine werkstückachsparallele Richtungskomponenten aufweisende Schneidbewegung der Schneidkanten zu einer axialen Seite (3; 3A, 3B) der Werkstückverzahnung ausläuft, wobei die Schneidkanten des Schneidrads einen gegenüber dem Werkstück mittels Bewegungsachsen positionierbaren ersten Eingriffsbereich bilden,
und bei dem in einem zweiten Bearbeitungseingriff mit einem zweiten Eingriffsbereich (8; 18) eine Bearbeitung des Werkstücks an der bewegungsauslaufenden Seite (3; 3A, 3B) der Werkstückverzahnung erfolgt, bei der die durch die Verzahnungserzeugung im ersten Bearbeitungseingriff entstandenen Primärgrate abgeschnitten werden, aber keine Einwirkung auf die Zahnkanten der erzeugten Verzahnung stattfindet, durch die Material von der Kante selbst abgenommen wird,
**dadurch gekennzeichnet, dass** der zweite Eingriffsbereich mittels gleicher Bewegungsachsen gegenüber dem Werkstück positionierbar ist wie der erste Eingriffsbereich und mit dem ersten Eingriffsbereich bewegungsgekoppelt ist.

2. Verfahren nach Anspruch 1, bei dem der zweite Eingriffsbereich um eine Drehachse (Z0) drehbar ist, die im zweiten Bearbeitungseingriff koaxial zu einer im ersten Bearbeitungseingriff koaxial zur Drehachse (Z2) des Schneidrads verlaufenden Werkzeugspindelachse verläuft, insbesondere bei dem der erste und der zweite Eingriffsbereich rotatorisch (B1) über dieselbe Drehachse gekoppelt sind.

3. Verfahren nach Anspruch 1 oder 2, bei dem der zweite Eingriffsbereich durch eine Verzahnung gebildet ist.

4. Verfahren nach einem der vorhergehenden Ansprüche, bei dem der zweite Eingriffsbereich bezüglich der werkstückachsparallelen Schneidbewegungsrichtungskomponente hinter dem ersten Eingriffsbereich liegt.

5. Verfahren nach einem der vorhergehenden Ansprüche, bei dem der zweite Eingriffsbereich nahe der zweiten Stirnseite des Schneidrads gebildet ist, insbesondere durch die Schneidradverzahnung (4) an dieser zweiten Stirnseite (8).

6. Verfahren nach einem der Ansprüche 1 bis 4, bei dem der zweite Eingriffsbereich an einem zweiten Schneidrad (11) gebildet ist, das insbesondere starr mit dem Schneidrad des ersten Bearbeitungseingriffs verbunden ist und dessen Abmessung in Schneidradachsrichtung insbesondere geringer ist als die des ersten Schneidrads, bevorzugt um wenigstens 20 %, insbesondere um wenigstens 40 %.

7. Verfahren nach einem der Ansprüche 3 bis 6, bei dem der Kopfkreis der Verzahnung des zweiten Eingriffsbereichs bei dem zweiten Bearbeitungseingriff mit dem Fußkreis der Werkstückverzahnung zur Überlappung gebracht wird.

8. Verfahren nach einem der Ansprüche 3 bis 7, bei dem bei dem zweiten Bearbeitungseingriff, in Projektion auf eine Ebene orthogonal zur Werkstückachse gesehen, ein Flankenbereich der Werkstückverzahnung mit einem Verzahnungsflankenbereich des zweiten Eingriffsbereichs zur Überlappung gebracht wird.

9. Verfahren nach einem der vorhergehenden Ansprüche, bei dem bei dem zweiten Bearbeitungseingriff in Folge der Erzeugung der Werkstückverzahnung an deren bewegungsauslaufender Seite entstandene Grate abgeschert werden.

10. Verfahren nach Anspruch 9, bei dem das Abscheren der Grate durch eine Scherbewegung erfolgt, die von einer Lücke (22) der Werkstückverzahnung weg gerichtet ist, an der einen wie insbesondere auch der anderen der die Lücke begrenzenden Zahnflanken (22R, 22L) und insbesondere dem angrenzenden Zahnfußbereich.

11. Verfahren nach einem der vorhergehenden Ansprüche, bei dem im zweiten Bearbeitungseingriff eine Bearbeitung an der Seite der linken und rechten Verzahnungsflanke nacheinander erfolgt.

12. Verfahren nach Anspruch 11, bei dem bei dem zweiten Bearbeitungseingriff zwischen der Bearbeitung an der linken und an der rechten Flanke die Drehrichtung der Werkstückdrehung umgekehrt wird, insbesondere auch eine Drehrichtung einer Drehung des zweiten Eingriffsbereichs.

13. Verfahren nach einem der vorhergehenden Ansprüche, bei dem der zweite Eingriffsbereich zunächst bezüglich der werkstückachsparallelen Schneidbewegungskomponente hinter der bewegungsauslaufenden Seite der Werkstückverzahnung positioniert wird, dann sein Abstand zur Werkstückachse geändert wird und er für den zweiten Bearbeitungseingriff entgegen der werkstückachsparallelen Schneidbewegungskomponente bewegt wird.

14. Verfahren nach einem der vorhergehenden Ansprüche, bei dem die Werkstückdrehachse und eine/die Drehachse des zweiten Eingriffsbereichs für den zweiten Bearbeitungseingriff in einem vorbestimmten Drehzahlverhältnis angetrieben werden, insbesondere im umgekehrten Verhältnis der zugehörigen Zähnezahl.

15. Verfahren nach einem der Ansprüche 7 bis 14, bei dem für den zweiten Bearbeitungseingriff zur Überlappung eine werkstück- und/oder werkzeugseitige Zusatzdrehung (ΔB1; ΔC1) ausgeführt wird.

16. Verfahren nach einem der vorhergehenden Ansprüche, bei dem im zweiten Bearbeitungseingriff eine Relativbewegung mit radial (X1) zur Werkstückachse verlaufender Richtungskomponente ausgeführt wird.

17. Verfahren nach einem der Ansprüche 3 bis 16, bei dem im zweiten Bearbeitungseingriff eine gegenseitige Lageänderung zwischen Werkstück und einer/der Einhüllenden (55) von Wälzstellungen (5', 5", ...) eines Zahns (5) des zweiten Eingriffsbereichs vorgenommen wird, insbesondere die Einhüllende entlang einer Tangential (Y1)und Radialkomponenten (X1) aufweisenden Bahn bewegt wird.

18. Verfahren nach einem der vorhergehenden Ansprüche, bei dem die Bewegungsachsen eine erste Linearbewegungsachse (Z1) mit Richtungskomponente parallel zur Werkstückachse und eine zweite Linearbewegungsachse (X1) mit Richtungskomponente orthogonal zur ersten Linearbewegungsachse aufweisen, und insbesondere eine dritte Linearbewegungsachse (Y1) mit einer Richtungskomponente orthogonal zu der von der ersten und zweiten Linearbewegungsachsen aufgespannten Ebene aufweisen.

19. Verfahren nach einem der vorhergehenden Ansprüche, bei dem die Bewegungsachsen eine rotatorische Achse (A1) zur Einstellung eines Achskreuzwinkels (ξ) zwischen Werkstückachse und Schneidradachse aufweisen.

20. Verfahren nach einem der vorhergehenden Ansprüche, bei dem eine Orientierung einer der Stirnfläche (8, 8', 8") der Werkstückverzahnung an der bewegungsauslaufenden Seite im zweiten Bearbeitungseingriff zugewandte werkzeugseitige Stirnfläche an die Orientierung der Werkstückstirnfläche angepasst wird, insbesondere durch an die Maschinenachseinstellungen im zweiten Bearbeitungseingriff angepasste Werkzeugformgebung und/oder durch an die Werkzeugform angepasste Einstellungen der Maschinenachsen im zweiten Bearbeitungseingriff.

21. Verfahren nach einem der vorhergehenden Ansprüche, bei dem eine Kontaktherstellung des zweiten Bearbeitungseingriffs sensorisch erfasst wird.

22. Werkzeuganordnung zur Ausführung des ersten und zweiten Bearbeitungseingriffs eines Verfahrens nach einem der vorhergehenden Ansprüche, aufweisend das Schälrad (10) mit dem ersten Eingriffsbereich (6), der von Schneidkanten (6) an der Verzahnung (4) des Schälrads (10) an einer ersten Stirnseite gebildet ist, sowie den zweiten Eingriffsbereich (8), der bevorzugt durch eine Verzahnung gebildet ist und der mit dem ersten Eingriffsbereich (6) bewegungsgekoppelt ist und mit dem in dem zweiten Bearbeitungseingriff mit dem zweiten Eingriffsbereich (8; 18) eine Bearbeitung des Werkstücks an der bewegungsauslaufenden Seite (3; 3A, 3B) der Werkstückverzahnung erfolgen kann, bei der die durch die Verzahnungserzeugung im ersten Bearbeitungseingriff entstandenen Primärgrate abgeschnitten werden, aber keine Einwirkung auf die Zahnkanten der erzeugten Verzahnung stattfindet, durch die Material von der Kante selbst abgenommen wird.

23. Werkzeuganordnung nach Anspruch 22, bei der der zweite Eingriffsbereich durch die Schneidradverzahnung (4) an deren zweiter Stirnseite (8) gebildet ist.

24. Werkzeuganordnung nach Anspruch 22, bei der der zweite Eingriffsbereich an einem zweiten, von dem den ersten Eingriffsbereich aufweisenden Schneidrad axial beabstandeten Schneidrad (11) gebildet ist.

25. Werkzeuganordnung nach einem der Ansprüche 22 bis 24, bei dem der zweite Eingriffsbereich geschliffen und/oder beschichtet ist, und insbesondere Verrundungen an seinen Zahnkanten vorgesehen sind.

26. Werkzeugmaschine (100), insbesondere Wälzschälmaschine, mit wenigstens einer Werkstückspindel zur Aufnahme eines Werkstücks und wenigstens einer Werkzeugspindel zur Aufnahme einer Werkzeuganordnung sowie einer Steuereinrichtung,
**dadurch gekennzeichnet, dass** die Steuereinrichtung mit einem Steuerprogramm ausgestattet ist, welches die Werkzeugmaschine zur Ausführung eines Verfahrens nach einem der Ansprüche 1 bis 21 an einem auf wenigstens einer der wenigstens einen Werkstückspindel aufgenommenen Werkstück (20) mit wenigstens einer auf wenigstens einer der wenigstens einen Werkzeugspindel aufgenommenen Werkzeuganordnung (10) steuert, insbesondere einer Werkzeuganordnung nach einem der Ansprüche 22 bis 24.

## Claims

1. A method for machining a workpiece (20; 20'),
wherein, in a power skiving method, a toothing (2; 2A, 2B) is produced on the workpiece in a first machining operation in which a toothed cutting wheel (10), which is designed as a skiving wheel and rotates around its axis of rotation (Z0) and, on a first end face, comprises cutting edges (6) on the toothing (4) thereof, is coupled in a rolling manner with the workpiece which rotates around its axis of rotation (Z2), and a cutting movement of the cutting edges, which has directional components parallel to the workpiece axis, ends at an axial side (3; 3A, 3B) of the workpiece toothing, wherein the cutting edges of the cutting wheel form a first operating region which can be positioned relative to the workpiece by means of movement axes,
and wherein, in a second machining operation using a second operating region (8; 18), the workpiece is machined on the side (3; 3A, 3B) of the workpiece toothing at which the movement ends, during which machining the primary burrs formed as a result of the production of the toothing in the first machining operation are cut off without affecting the tooth edges of the toothing produced, by means of which the material is removed from the edge itself,
**characterised in that** the second operating region can be positioned relative to the workpiece by means of the same axes of movement as the first operating region, and in particular is coupled for movement to the first operating region.

2. The method in accordance with claim 1, wherein the second operating region can be rotated around an axis of rotation (Z0) which, in the second machining operation, extends coaxially with a tool spindle axis which extends coaxially with the axis of rotation (Z2) of the cutting wheel in the first machining operation, wherein in particular the first and the second operating region are rotationally (B1) coupled by means of the same axis of rotation.

3. The method in accordance with claim 1 or 2, wherein the second operating region is formed by a toothing.

4. The method in accordance with one of the preceding claims, wherein the second operating region is located behind the first operating region relative to the cutting movement directional component which is parallel to the workpiece axis.

5. The method in accordance with one of the preceding claims, wherein the second operating region is formed close to the second end face of the cutting wheel, in particular by means of the cutting wheel toothing (4) on this second end face (8).

6. The method in accordance with one of claims 1 to 4, wherein the second operating region is formed on a second cutting wheel (11), which is connected, in particular rigidly, to the cutting wheel of the first machining operation and the dimension of which in the direction of the cutting wheel axis is in particular less than that of the first cutting wheel, preferably by at least 20%, in particular by at least 40%.

7. The method in accordance with one of claims 3 to 6, wherein the tip circle of the toothing of the second operating region is made to overlap with the root circle of the workpiece toothing during the second machining operation.

8. The method in accordance with one of claims 3 to 7, wherein, during the second machining operation, as seen in a projection onto a plane which is orthogonal to the workpiece axis, a flank region of the workpiece toothing is made to overlap with a toothing flank region of the second operating region.

9. The method in accordance with one of the preceding claims, wherein, during the second machining operation, any burrs formed as a result of the production of the workpiece toothing on the side thereof at which the cutting movement ends are sheared off.

10. The method in accordance with claim 9, wherein the shearing-off of the burrs is carried out by means of a shearing movement, which is directed away from a gap (22) in the workpiece toothing, on one and in particular also on the other of the tooth flanks (22R, 22L) delimiting the gap, and in particular on the adjacent tooth root region.

11. The method in accordance with one of the preceding claims, wherein, in the second machining operation, machining is carried out on the side of the left and right toothing flanks one after the other.

12. The method in accordance with claim 11, wherein, during the second machining operation, between the machining on the left and right flanks, the direction of the workpiece rotation is reversed, and so, in particular, is the direction of rotation of the second operating region.

13. The method in accordance with one of the preceding claims, wherein the second operating region is initially positioned behind the side of the workpiece toothing at which the movement ends, relative to the cutting movement component which is parallel to the workpiece axis, then the distance of this operating region from the workpiece axis is changed, and said region is moved against the cutting movement component which is parallel to the workpiece axis for the second machining operation.

14. The method in accordance with one of the preceding claims, wherein the workpiece axis of rotation and a/the axis of rotation of the second operating region are driven at a predetermined speed ratio for the second machining operation, in particular in inverse ratio to the associated number of teeth.

15. The method in accordance with one of claims 7 to 14, wherein, for the second machining operation, to produce overlapping, an additional rotation (ΔB1; ΔC1) of the workpiece and/or tool is carried out.

16. The method in accordance with one of the preceding claims, wherein, in the second machining operation, a relative movement having a directional component which extends radially (XI) relative to the workpiece axis is carried out.

17. The method in accordance with one of claims 3 to 16, wherein, in the second machining operation, a mutual change in position between the workpiece and a/the envelope (55) of rolling positions (5', 5" etc.) of a tooth (5) of the second operating region is carried out, in particular wherein the envelope is moved along a path having a tangential (Y1) and a radial component (XI).

18. The method in accordance with one of the preceding claims, wherein the movement axes comprise a first linear movement axis (Zl) having a directional component parallel to the workpiece axis, and a second linear movement axis (XI) having a directional component which is orthogonal to the first linear movement axis, and in particular a third linear movement axis (Y1) having a directional component which is orthogonal to the plane spanned by the first and second linear movement axes.

19. The method in accordance with one of the preceding claims, wherein the movement axes comprise a rotational axis (A1) for setting an axis-crossing angle (ξ) between the workpiece axis and cutting wheel axis.

20. The method in accordance with one of the preceding claims, wherein an orientation of a tool-side end face which, in the second machining operation, is facing the end face (8, 8', 8") of the workpiece toothing on the side at which the movement ends is adapted to the orientation of the workpiece end face, in particular by means of tool shaping which is adapted to the machine axis settings in the second machining operation and/or by means of machine axis settings which are adapted to the shape of the tool in the second machining operation.

21. The method in accordance with one of the preceding claims, wherein contacting in the second machining operation is detected using sensors.

22. A tool arrangement for carrying out the second machining operation of a method in accordance with one of the preceding claims, comprising the skiving wheel (10) having the first operating region (6), which is formed on a first end face by cutting edges (6) on the toothing (4) of the skiving wheel (10), and the second operating region (8), which is preferably formed by a toothing and is coupled for movement with the first operating region (6) and by means of which, in the second machining operation with the second operating region (8; 18), the workpiece can be machined on the side (3; 3A, 3B) of the workpiece toothing at which the movement ends, wherein the primary burrs formed as a result of the production of the toothing in the first machining operation are cut off without affecting the tooth edges of the toothing produced, by means of which the material is removed from the edge itself.

23. The tool arrangement in accordance with claim 22, wherein the second operating region is formed by the cutting wheel toothing (4) on the second end face (8) thereof.

24. The tool arrangement in accordance with claim 22, wherein the second operating region is formed on a second cutting wheel (11) which is axially spaced away from the cutting wheel comprising the first operating region.

25. The tool arrangement in accordance with one of claims 22 to 24, wherein the second operating region is ground and/or coated, and in particular the tooth edges of the second operating region are rounded.

26. The machine tool (100), in particular a power skiving machine, comprising one or more workpiece spindles for receiving a workpiece and one or more tool spindles for receiving a tool arrangement as well as a control unit,
**characterised in that** the control unit is equipped with a control program which controls the machine tool to carry out a method in accordance with one of claims 1 to 21 on a workpiece (20) which is received on at least one of the one or more workpiece spindles, using at least one tool arrangement (10) which is received on at least one of the one or more workpiece spindles, in particular using a tool arrangement in accordance with one of claims 22 to 24.

## Revendications

1. Procédé d'usinage d'une pièce (20 ; 20'),
dans lequel, dans un procédé de taillage par génération, une denture (2 ; 2A, 2B) est produite sur la pièce dans le cadre d'un premier contact d'usinage dans lequel une roue de taillage (10) dentée, conçue sous la forme d'un pignon de décolletage, en rotation sur son axe de rotation (Z0) et présentant, sur une première face frontale, des arêtes de coupe (6) sur sa denture (4), est en engrènement de génération avec la pièce en rotation sur son axe de rotation (Z2), et un mouvement de coupe des arêtes de coupe, qui présente des composantes directionnelles parallèles à l'axe de la pièce, aboutit sur un côté axial (3 ; 3A, 3B) de la denture de la pièce, lesdites arêtes de coupe de la roue de taillage constituant une première zone de contact susceptible d'être positionnée vis-à-vis de la pièce au moyen d'axes de mouvement,
et dans lequel, dans le cadre d'un deuxième contact d'usinage mettant en œuvre une deuxième zone de contact (8; 18), il se produit un usinage de la pièce sur le côté (3 ; 3A, 3B) de la denture de la pièce où aboutit le mouvement, dans le cadre duquel usinage les bavures primaires résultant de la production de la denture dans le cadre du premier contact d'usinage sont sectionnées, sans que cela affecte les arêtes de coupe de la denture produite grâce à laquelle de la matière est elle-même éliminée de l'arête,
**caractérisé en ce que** la deuxième zone de contact est positionnable par rapport à la pièce au moyen des mêmes axes de mouvement que la première zone de contact et est notamment couplée en mouvement avec la première zone de contact.

2. Procédé selon la revendication 1, dans lequel la deuxième zone de contact peut subir une rotation sur un axe de rotation (Z0) qui, dans le cadre du deuxième contact d'usinage, est coaxial à l'axe d'une broche porte-outil qui est coaxial, dans le cadre du premier contact d'usinage, à l'axe de rotation (Z2) de la roue de taillage, et notamment dans lequel la première et la deuxième zone de contact sont couplées en rotation (B1) sur un même axe de rotation.

3. Procédé selon la revendication 1 ou 2, dans lequel la deuxième zone de contact est constituée par une denture.

4. Procédé selon l'une des revendications précédentes, dans lequel la deuxième zone de contact se trouve derrière la première zone de contact, eu égard à la composante directionnelle du mouvement de coupe parallèle à l'axe de la pièce.

5. Procédé selon l'une des revendications précédentes, dans lequel la deuxième zone de contact est constituée à proximité de la deuxième face frontale de la roue de taillage, notamment par une denture de roue de taillage (4) sur ladite deuxième face frontale (8).

6. Procédé selon l'une des revendications 1 à 4, dans lequel la deuxième zone de contact est constituée sur une deuxième roue de taillage (11) qui est raccordée notamment fixement à la roue de taillage du premier contact d'usinage et dont la dimension selon l'axe de la roue de taillage est notamment inférieure à celle de la première roue de taillage, de préférence d'au moins 20 % et notamment d'au moins 40 %.

7. Procédé selon l'une des revendications 3 à 6, dans lequel le cercle de tête de la denture de la deuxième zone de contact est amené à chevaucher le cercle de pied de la denture de la pièce lors du deuxième contact d'usinage.

8. Procédé selon l'une des revendications 3 à 7, dans lequel, lors du deuxième contact d'usinage, vu en projection sur un plan orthogonal à l'axe de la pièce, une zone de flanc de la denture de la pièce est amenée à chevaucher une zone de flanc de denture de la deuxième zone de contact.

9. Procédé selon l'une des revendications précédentes, dans lequel, lors du deuxième contact d'usinage, les bavures résultant de la production de la denture de la pièce au niveau de son côté où aboutit le mouvement sont cisaillées.

10. Procédé selon la revendication 9, dans lequel le cisaillement des bavures s'effectuent selon un mouvement de cisaillement orienté en s'éloignant d'un creux (22) de la denture de la pièce au niveau d'un voire notamment aussi de l'autre des flancs de dent (22R, 22L) délimitant ledit creux et notamment au niveau de la zone de pied de dent contiguë.

11. Procédé selon l'une des revendications précédentes, dans lequel, dans le cadre du deuxième contact d'usinage, il se produit un usinage sur le côté des flancs de denture droit et gauche, successivement.

12. Procédé selon la revendication 11, dans lequel, lors du deuxième contact d'usinage, entre l'usinage sur le flanc droit et sur le flanc gauche, le sens de rotation de la pièce s'inverse, de même notamment que le sens de rotation de la deuxième zone de contact.

13. Procédé selon l'une des revendications précédentes, dans lequel la deuxième zone de contact est tout d'abord positionnée derrière le côté de la denture de la pièce où aboutit le mouvement, eu égard à la composante de mouvement de coupe parallèle à l'axe de la pièce, puis son écart par rapport à l'axe de la pièce est modifié et elle est déplacée, pour le deuxième contact d'usinage, à l'encontre la composante de mouvement de coupe parallèle à l'axe de la pièce.

14. Procédé selon l'une des revendications précédentes, dans lequel l'axe de rotation de la pièce et un/l'axe de rotation de la deuxième zone de contact sont entraînés selon un rapport de vitesse de rotation prédéterminé pour le deuxième contact d'usinage, notamment selon un rapport inverse au nombre de dents concerné.

15. Procédé selon l'une des revendications 7 à 14, dans lequel, pour le deuxième contact d'usinage en vue dudit chevauchement, il est effectué une rotation supplémentaire (ΔB1 ; AC1) côté pièce et/ou côté outil.

16. Procédé selon l'une des revendications précédentes, dans lequel, dans le cadre du deuxième contact d'usinage, il est effectué un mouvement relatif doté d'une composante directionnelle radiale (X1) par rapport à l'axe de la pièce.

17. Procédé selon l'une des revendications 3 à 16, dans lequel, dans le cadre du deuxième contact d'usinage, il est entrepris une modification mutuelle de position entre la pièce et une/l'enveloppe (55) de positions de génération (5', 5", ...) d'une dent (5) de la deuxième zone de contact, dans lequel notamment l'enveloppe subit un déplacement le long d'une voie présentant une composante tangentielle (Y1) et radiale (X1).

18. Procédé selon l'une des revendications précédentes, dans lequel les axes de mouvement comprennent un premier axe de mouvement linéaire (Z1) doté d'une composante directionnelle parallèle à l'axe de la pièce et un deuxième axe de mouvement linéaire (X1) doté d'une composante directionnelle orthogonale au premier axe de mouvement linéaire, et notamment un troisième axe de mouvement linéaire (Y1) doté d'une composante directionnelle orthogonale au plan formé par les premier et deuxième axes de mouvement linéaire.

19. Procédé selon l'une des revendications précédentes, dans lequel les axes de mouvement comprennent un axe rotatif (A1) destiné au réglage d'un angle des axes (ξ) entre l'axe de la pièce et l'axe de la roue de taillage.

20. Procédé selon l'une des revendications précédentes, dans lequel l'orientation d'une face frontale côté outil opposée à la face frontale (8, 8', 8") de la denture de la pièce au niveau du côté où aboutit le mouvement dans le cadre du deuxième contact d'usinage est adaptée à l'orientation de la face frontale de la pièce, notamment grâce à une mise en forme de l'outil adaptée aux réglages des axes de la machine dans le cadre du deuxième contact d'usinage et/ou grâce à des réglages des axes de la machine adaptés à la forme de l'outil dans le cadre du deuxième contact d'usinage.

21. Procédé selon l'une des revendications précédentes, dans lequel la réalisation d'un contact lors du deuxième contact d'usinage est détectée par un capteur.

22. Ensemble formant outil destiné à réaliser le deuxième contact d'usinage d'un procédé selon l'une des revendications précédentes, présentant le pignon de décolletage (10) doté de la première zone de contact (6) constituée, sur une première face frontale, par des arêtes de coupe (6) sur la denture (4) du pignon de décolletage (10), et doté de la deuxième zone de contact (8) de préférence constituée par une denture et couplée en mouvement avec la première zone de contact (6) et avec laquelle peut s'effectuer, dans le cadre du deuxième contact d'usinage mettant en œuvre la deuxième zone de contact (8 ; 18), un usinage de la pièce sur le côté (3 ; 3A, 3B) de la denture de la pièce où aboutit le mouvement, dans lequel ensemble les bavures primaires résultant de la production de la denture dans le cadre du premier contact d'usinage sont sectionnées sans que cela affecte les arêtes de coupe de la denture produite grâce à laquelle de la matière est elle-même éliminée de l'arête.

23. Ensemble formant outil selon la revendication 22, dans lequel la deuxième zone de contact est constituée par la denture de roue de taillage (4) sur sa deuxième face frontale (8).

24. Ensemble formant outil selon la revendication 22, dans lequel la deuxième zone de contact est conçue sur une deuxième roue de taillage (11) espacée axialement de la roue de taillage présentant la première zone de contact.

25. Ensemble formant outil selon l'une des revendications 22 à 24, dans lequel la deuxième zone de contact est rectifiée et/ou revêtue, et des arrondis sont notamment prévus sur ses arêtes de dents.

26. Machine-outil (100), notamment machine de taillage par génération, présentant une ou plusieurs broches porte-pièce destinées à recevoir une pièce, une ou plusieurs broches porte-outil destinées à recevoir un ensemble formant outil, ainsi qu'un dispositif de commande, **caractérisée en ce que** le dispositif de commande est muni d'un programme de commande qui commande la machine-outil afin qu'elle mette en œuvre un procédé selon l'une des revendications 1 à 21 sur une pièce (20) reçue sur au moins une broche porte-pièce parmi la ou les broches porte-pièce à l'aide d'au moins un ensemble formant outil (10) reçu sur au moins une broche porte-outil parmi la ou les broches porte-outil, notamment un ensemble formant outil selon l'une des revendications 22 à 24.
